(19) Europäisches Patentamt / European Patent Office / Office européen des brevets

(11) **EP 4 028 459 B1**

(12) **EUROPEAN PATENT SPECIFICATION**

(45) Date of publication and mention of the grant of the patent:
**10.09.2025 Bulletin 2025/37**

(21) Application number: **20862320.7**

(22) Date of filing: **09.09.2020**

(51) International Patent Classification (IPC):
***C08J 9/14*** $^{(2006.01)}$ ***C08G 18/76*** $^{(2006.01)}$
***C08G 18/48*** $^{(2006.01)}$ ***C08G 18/16*** $^{(2006.01)}$
***C08G 18/18*** $^{(2006.01)}$ ***C08G 18/20*** $^{(2006.01)}$
***C08G 18/22*** $^{(2006.01)}$ ***C08G 18/24*** $^{(2006.01)}$
***C08G 18/30*** $^{(2006.01)}$ ***C08G 18/32*** $^{(2006.01)}$
***C08G 18/38*** $^{(2006.01)}$ ***C08G 18/42*** $^{(2006.01)}$
***C08G 18/66*** $^{(2006.01)}$ ***C08G 101/00*** $^{(2006.01)}$

(52) Cooperative Patent Classification (CPC):
**C08G 18/7664; C08G 18/161; C08G 18/163; C08G 18/165; C08G 18/1816; C08G 18/2081; C08G 18/225; C08G 18/242; C08G 18/302; C08G 18/3206; C08G 18/381; C08G 18/4202; C08G 18/4211; C08G 18/4238; C08G 18/425;**
(Cont.)

(86) International application number:
**PCT/US2020/049948**

(87) International publication number:
**WO 2021/050548 (18.03.2021 Gazette 2021/11)**

(54) **IMPROVED POLYURETHANE FOAM USING HFO PROPELLANTS**

VERBESSERTER POLYURETHANSCHAUM UNTER VERWENDUNG VON HFO-TREIBMITTELN

MOUSSE DE POLYURÉTHANE AMÉLIORÉE UTILISANT DES PROPULSEURS HFO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2019 US 201916568974**

(43) Date of publication of application:
**20.07.2022 Bulletin 2022/29**

(73) Proprietor: **ICP Construction, Inc.**
**Andover, MA 01810 (US)**

(72) Inventors:
- **SHINKO, Andrew P.**
**Uniontown, Ohio 44685 (US)**
- **TAYLOR, Anthony J.**
**Medina, Ohio 44256 (US)**

(74) Representative: **Marks & Clerk LLP**
**15 Fetter Lane**
**London EC4A 1BW (GB)**

(56) References cited:
**WO-A1-2014/134087**
**WO-A1-2016/149001**
**WO-A1-2017/058318**
**US-A1- 2012 283 339**
**US-A1- 2016 200 890**
**US-A1- 2018 079 881**
**US-A1- 2019 077 934**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 028 459 B1

(52) Cooperative Patent Classification (CPC): (Cont.)
**C08G 18/4816; C08G 18/4829; C08G 18/4883; C08G 18/6644; C08G 18/6677; C08J 9/144; C08J 9/146;** C08G 2101/00; C08J 2201/022; C08J 2203/162; C08J 2375/04

## Description

### *Technical Field*

The invention described herein pertains generally to a polyurethane foam composition which is blown using at least one hydrofluoroolefin ("HFO") propellant.

### *Background of the Invention*

Two-component low pressure (less than 17.2 bar (250 psi)) spray polyurethane foam (SPF) kits require a sufficient amount of blowing agent in order to fully dispense the contents of both the A-side (isocyanate) and B-side (polyols, surfactants, catalysts, etc.) chemicals. This must be done in such a manner where both A and B components are propelled at a predetermined ratio that is maintained throughout the dispensing of the product. On the other hand, one component low pressure polyurethane foam (OCF) systems are already pre-mixed in closed systems where the A/B ratio is predefined. OCF systems are typically blown with hydrocarbons, but flammability concerns restrict their usage in certain sizes. Since most SPF kits are dispensed in pressurized cylinders, less flammable blowing agents must be considered. The blowing agent(s) used must be at least partially miscible with both A-sides and B-sides and should not react with either contents.

Previous blowing agents for SPF systems have included chlorofluorocarbons (CFCs) and hydrochlorofluorocarbons (HCFCs). These blowing agents, while reliable, are a threat to the stability of the ozone layer due to their ability to release chlorine atoms under ultraviolet light exposure. Free chlorine atoms readily react with ozone; therefore, compounds such as CFCs and HCFCs are said to have high ozone depletion potential (ODP). The Montreal Protocol was established in part to reduce emissions deemed responsible for the growth in the ozone layer hole. This agreement and subsequent additions were ratified by the maximum number of UN signatories. Due to this widespread acceptance, CFC and HCFC propellants were phased out and replaced by hydrofluorocarbon (HFC) blowing agents in the late 1990's and early 2000's.

HFC-134a became the non-flammable blowing agent of choice for the low-pressure SPF industry due to relative ease of transition among other factors. While HFC-134a and other HFC blowing agents have an ODP value of zero, these compounds reportedly have a high global warming potential (GWP). Unlike ODP, GWP is measured by atmospheric residence time and infrared radiation absorption relative to the Earth's atmosphere. These factors determine the radiative forcing of the molecule. A positive radiative forcing value indicates a higher potential for warming the planet; that is, more solar radiation is absorbed than reflected out to space. The radiative forcing of a particular molecule is compared against the radiative forcing of carbon dioxide. The resulting number is the GWP of the particular molecule, with carbon dioxide given a GWP of 1. Radiative forcing is not a linear quantity, however, and is dependent on external factors such as climate sensitivity and molecule-specific pulse emissions over a particular time period, denoted as time horizons measured in 20, 100, and 500 years. For instance, the global warming potential of 134a decreases with increasing time horizon, but the global warming potential of many perfluorocarbons increases with increasing time horizon. Because of this discrepancy, most GWP values are typically reported at a time horizon of 100 years. In addition, GWP values have changed over time as improved modeling and empirical data becomes readily available. To this end, the GWP of HFC-134a reported by the Intergovernmental Panel on Climate Change has changed from: 1300 in 2001; to 1430 in 2007; to 1550 in 2013.

While the abundance of HFCs in the Earth's atmosphere is much less than that of carbon dioxide, HFC emissions are projected to grow between 7-19% to that of carbon dioxide emissions by 2050. This may result in the total radiative forcing of HFCs increasing by a factor of 10 to 30 times by 2050. In light of this and other data, the Kyoto Protocol was established in order to reduce greenhouse gas emissions, which included HFCs. This new agreement has gained traction, especially in the United States. A Significant New Alternative Policy (SNAP) ruling by the EPA had established effective end dates for producing foaming products with HFC blowing agents. The current proposed date for unacceptable HFC usage is January 1$^{st}$, 2020 for rigid polyurethane one-component foams and January 1$^{st}$, 2021 for rigid polyurethane low pressure two-component foams. Although the rule has since been vacated, changes remain in effect at state-level and jurisdictions outside the United States. A New policy is expected in the near future.

Potential low GWP replacements for HFC blowing agents include hydrofluorooelfin (HFO) blowing agents. Specifically, the Solstice® Gas Blowing agent (GBA, HFO-1234ze, trans 1,3,3,3 tetrafluoropropene) produced by Honeywell has been proposed as a blowing agent for low pressure SPF systems. Attractive properties of HFO-1234ze include a low boiling point (-19°C) and favorable kauri-butanol solubility (12.5 compared to 9.2 for HFC-134a). In addition, HFO-1234ze has an ODP of zero, is volatile organic carbon (VOC) exempt, and has a GWP of less than 1 due in part to its low atmospheric lifetime (~18 days) compared with HFC-134a (13.4 years).

Although HFO blowing agents like HFO-1234ze meet requirements for the Kyoto Protocol (GWP < 150) and are cleared for use under SNAP 21, the short lifespan of the molecule has led to challenges with the product shelf life of closed SPF systems. Stated earlier, SPF systems contain A-side (isocyanate) and B-side (resin) components stored separately

under pressure. Both contents require propellants to fully dispense these mixtures. HFO-1234ze and other HFO blowing agents tend to break down and interact with moieties in the B-side. HFO molecules are believed to react with amine catalysts, for example, via nucleophilic substitution. This reaction is believed to produce hydrofluoric acid, which in turn attack surfactants and polyols. Such phenomenon has been observed via nuclear magnetic resonance (NMR) and gas chromatography-mass spectrometry. These undesirable reactions yield a significant reduction in foam properties, particularly gelation and tack-free times, foam appearance, cell structure, and mechanical properties among others. Consequently, a simple 1:1 substitution of an HFC blowing agent with an HFO blowing agent in a polyurethane SPF system can reduce shelf life from one year or greater to a matter of weeks or days. Therefore, systems that were stable in HFCs must undergo modifications in order to meet the demand of shelf life stability and superior foam properties. Any formulated HFO adhesive must emulate the spray characteristics and general physical properties of the current HFC-blown two-component products currently on the market. The product must be shelf-life stable for at least 12 months. HFO-1234ze was selected as the blowing agent of choice for this study.

WO 2014/134087 A1 (Honeywell International Inc.) describes polyurethane and polyisocyanurate foams and methods for preparing these, more particularly closed-celled, polyurethane and polyisocyanurate foams and methods for their preparation, produced with a polyol premix composition which comprises a combination of a hydrohaloolefin blowing agent, a polyol, a silicone surfactant, and a precipitation-resistant metal-based catalyst used alone or in combination with an amine catalyst.

This invention was developed to overcome some of the limitations of the teachings of the prior art as well as to address long term stability issues when using HFO propellants in blowing polyurethane foams. The prior art appears to teach that aromatic polyester polyols are preferred in the "B" side of a two-component polyurethane foam and that there should be no more than approximately 10% aliphatic polyether polyol. This composition appeared to be counterintuitive as one having ordinary skill in the art might expect that polyester polyols would be problematic because polyester polyols are greater nucleophiles and therefore, more susceptible to attack.

The present invention overcomes some of the limitations taught in the prior art by teaching that higher loading of polyether polyols is possible in HFO blown two-component polyurethane foams, this improvement being achieved by the use of a catalyst package having a defined Sn/K ratio, in combination with the inclusion of glycerol, a low molecular weight triol.

### *Summary of the Invention*

The present invention is directed generally to a shelf-stable polyurethane HFO-blown two-component polyurethane foam composition which includes controlling the ratio of tin-containing catalyst(s) to potassium-containing catalyst(s).

In one aspect of the invention, a low-pressure two-component polyurethane foam composition is synthesized in which "A-side" and "B-side" reactants comprise: (a) at least one A-side diisocyanate and an HFO propellant; (b) at least two B-side polyols, at least one B-side plasticizer, optionally at least one flame retardant, at least one surfactant, at least two catalysts, glycerin, water and an HFO propellant; the at least two catalysts comprising at least one tin-containing catalyst and at least one potassium-containing catalyst; a weight ratio of the at least one tin-containing catalyst to the at least one potassium-containing catalyst being approximately equal to or greater than 0.5 (preferably greater than or equal to 0.67); a catalytic decay ratio of the polyurethane foam defined as a ratio of accelerated ageing gel time to initial gel time, and the catalytic decay ratio of the polyurethane foam being approximately equal to or less than 2.5. The polyurethane foam may have an initial density of at least approximately 25.6 mg/cm$^3$ (1.6 pounds/ft$^3$ (pcf)) and not exceeding a deviation of $\pm$8 mg/cm$^3$ ($\pm$0.5 pcf) after accelerated aging; the polyurethane foam may have an initial RSI-value of at least approximately 0.97 K·m$^2$/W (R-value 5.5 °F·Ft$^2$·h/BTU) and not exceeding a deviation of $\pm$0.18 K·m$^2$/W ($\pm$1 °F·Ft$^2$·h/BTU after accelerated aging; the polyurethane foam may have an initial closed cell content of at least approximately 85% and not exceeding a deviation of $\pm$20% after accelerated aging; the polyurethane foam may have a dimensional stability with no greater than approximately an 8% volume change after accelerated aging; the polyurethane foam may have an initial compression of at least approximately 0.7 bar (10 psi); and the polyurethane foam may have a dimensional stability of approximately $\pm$7%.

In another aspect of the invention, a process is disclosed for synthesizing a low-pressure two-component polyurethane foam composition in which "A-side" and "B-side" reactants comprise: at least one A-side diisocyanate and an HFO propellant; at least two B-side polyols, at least one B-side plasticizer, optionally at least one flame retardant; at least one surfactant, at least two catalysts, glycerin, water and an HFO propellant; the at least two catalysts comprising at least one tin-containing catalyst and at least one potassium-containing catalyst; a catalytic decay ratio of the polyurethane foam defined as a ratio of accelerated ageing gel time to initial gel time, and the catalytic decay ratio of the polyurethane foam being approximately equal to or less than 2.5. The polyurethane foam may have an initial density of at least approximately 25.6 mg/cm$^3$ (1.6pounds/ft$^3$ (pcf)) and not exceeding a deviation of $\pm$8 mg/cm$^3$ ($\pm$0.5 pcf) after accelerated aging; the polyurethane foam may have an initial RSI-value of at least approximately 0.97 K·m$^2$/W (R-value 5.5 °F·Ft$^2$·h/BTU) and

not exceeding a deviation of ±0.18 K·$m^2$/W (±1 °F·$Ft^2$·h/BTU) after accelerated aging; the polyurethane foam may have an initial closed cell content of at least approximately 85% and not exceeding a deviation of ±20% after accelerated aging; the polyurethane foam may have a dimensional stability with no greater than approximately an 8% volume change after accelerated aging; the polyurethane foam may have an initial compression of at least approximately 0.7 bar (10 psi); the polyurethane foam may have a dimensional stability of approximately ±7%; and the process may comprise the step of adding the at least one tin-containing catalyst and at least one potassium catalyst in a weight ratio of approximately equal to or greater than 0.5.

These and other objects of this invention will be evident when viewed in light of the drawings, detailed description and appended claims.

### *Brief Description of the Drawings*

*Fig.* 1 is a graphical depiction of varying the weight catalyst ratio of tin-containing catalyst to potassium-containing catalyst and its impact on the catalytic decay ratio ("CDR") for various polyurethane foams;

*Fig.* 2 is a graphical depiction of the impact of added glycerin compared to no added glycerin with various catalyst packages;

*Fig. 3* is a graphical depiction of dimensional stability of the synthesized polyurethane foam vs. the weight ratio of Sn-containing catalyst/K-containing catalyst; and

*Fig.* 4 is a graphical depiction of closed cell content of various synthesized polyurethane foam over time.

### *Detailed Description of the Invention*

The best mode for carrying out the invention will now be described for the purposes of illustrating the best mode known to the applicant at the time of the filing of this invention. The examples and figures are illustrative only and not meant to limit the invention.

Unless the context clearly indicates otherwise: the word "and" indicates the conjunctive; the word "or" indicates the disjunctive; when the article is phrased in the disjunctive, followed by the words "or both" or "combinations thereof" both the conjunctive and disjunctive are intended.

As used in this application, the term "approximately" is within 10% of the stated value, except where noted.

As used in this application, the term "catalytic decay ratio" or "CDR" is defined as the ratio of accelerated aging gel time to that of initial gel time. This value was recorded in order to determine gel time shift over the age of the system. A low CDR would indicate greater catalytic stability over that of a high CDR. For long term stability, the CDR ratio should remain less than or equal to approximately 2.5, more preferably less than or equal to approximately 2.0.

As also used in this application, "shelf life" means a polyurethane foam which when subjected to accelerated aging, still results in a foam having physical properties such as foam height, gel time, density, etc., preferably within approximately 20% of those parameters prior to accelerated aging.

As further used in this application, "accelerated aging" means storing the reactant combination and propellant at 50°C for 12 - 48 days prior to reacting the "A" and "B" cylinders and spraying the polyurethane foam. Using the Arrhenius equation, this equates to 3 - 12 months at room temperature.

As additionally used in this application, "low-pressure" means a pressure less than 17.2 bar (250 psi) at room temperature. Typically, the pressure in the full cylinders is between approximately 9.0-17.2 bar (130-250 psi).

The literature would appear to teach that to achieve shelf life stability for an HFO propellant-based two-component polyurethane composition, there should preferably be at least one aromatic polyester polyol (in a major amount) and no more than approximately 10% aliphatic polyether polyol. The literature appears to highlight the benefits of polyester polyols, and more specifically aromatic polyester polyols, over those of aliphatic polyether polyols. This composition was believed to be counterintuitive, as one skilled in the art might expect the polyester polyols to be problematic due to the polyester polyols being greater nucleophiles and, therefore, more susceptible to attack. The prior art would appear to be teaching that polyether polyols seem to be significantly detrimental to the shelf life of the foam product. See United States Published Patent Application No. 2019/0092910.

In this application, a shelf-life stable formula blown with a gaseous hydrofluoroolefin (HFO) was selected in the following study to show differences between catalysts, particularly those with tin and potassium in their chemical composition, as related to accelerated shelf stability of the polyurethane formulation.

The invention will now be described by a series of examples and identification of various reactants used in the

invention.

***Polyols***

As illustrated in a non-exhaustive, non-exclusive, exemplary list below, there are a myriad of polyols (both polyester polyols and polyether polyols) which are useful in effecting the reaction with a diisocyanate to form a foam having varying characteristics. The ability to add widely varying amounts of polyols and/or different polyol combinations could easily be affected via either supplementing existing amounts of "B-side" polyol(s) via the third stream or by essentially eliminating "B-side" polyol(s) and making their addition via the third stream. In one aspect of the invention, the polyol(s) are added by using a pumping mechanism from a "B-side" cylinder or other container, and the third stream is employed to add the blowing agent and/or pressurizing agent.

| Polyester Polyol(s) | |
|---|---|
| PS 2352 | 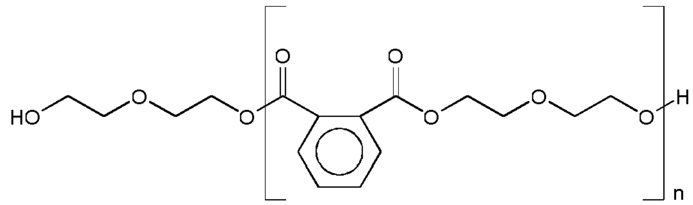<br>Hydroxyl Number, mg KOH/g: 230-250<br>Water, % by wt., max.: 0.15<br>Acid Number, mg KOH/g, max .: 0.6 - 1.0<br>Viscosity at 25 °C (77 °F), Pa·s (cP): 2.00 - 4.50 (2,000 - 4,500)<br>Equivalent Weight (average): 234<br>Molecular Weight (average): 468<br>Color, Gardner: 4<br>Density at 25 °C (77 °F), g/cm$^3$ (lb./U.S. gal): 1.19 (9.9)<br>n: 1-30<br>Specific Gravity at 25 °C (77 °F): 1.19 |
| DEG/PA backbone | 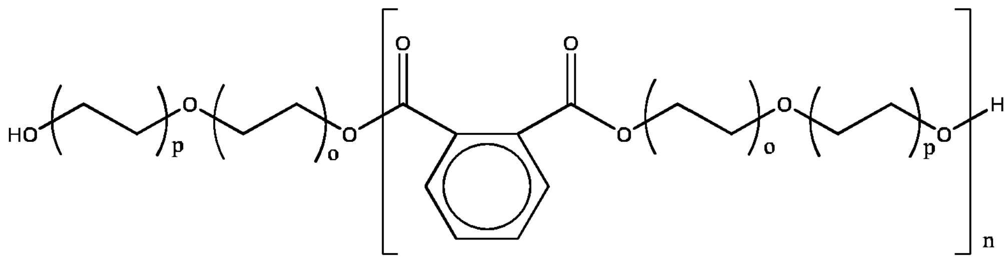<br>n ranges from 1-30 inclusive;<br>o ranges from 1 to 5 inclusive; and<br>p ranges from 1 to 5 inclusive; |

(continued)

| *Polyester Polyol(s)* | | |
|---|---|---|
| TB-350 | 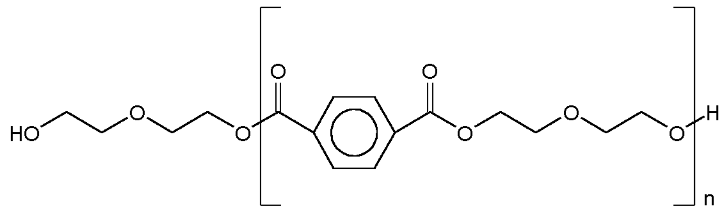 | |
| | Hydroxyl Number, mg KOH/g | 335-365 |
| | Water, % by wt., max. | 0.15 |
| | Acid Number, mg KOH/g, max . | 0.5 - 2.0 |
| | Viscosity at 25 °C (77 °F), Pa·s (cP) | 2.50 - 3.50 (2,500 - 3,500) |
| | Color, Gardner | 4-5 |
| | Specific Gravity at 25 °C (77 °F) | 1.233 |
| | Functionality | 2.2 |
| | n | 1-25 |

(continued)

| Polyester Polyol(s) | |
|---|---|
| DEG/TA backbone (diethylene glycol terephthalat e anhydride) | 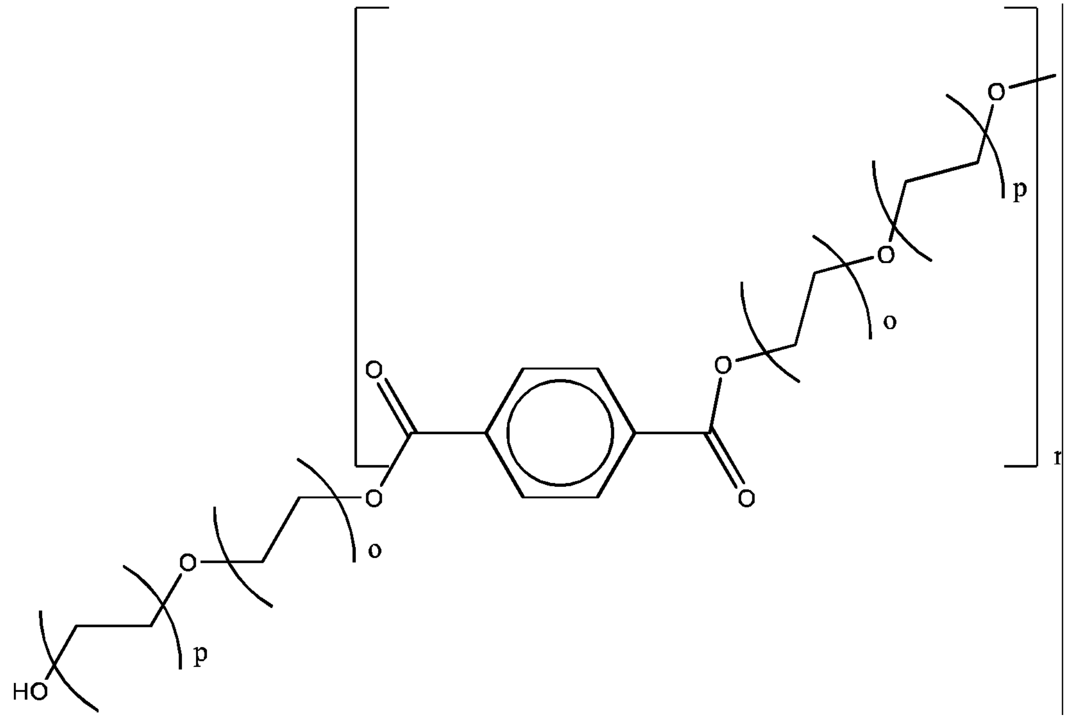 |
| | n ranges from 1-30 inclusive;<br>o ranges from 1 to 5 inclusive; and<br>p ranges from 1 to 5 inclusive; |

| | |
|---|---|
| Stepanpol® PS-3152 | Aromatic diethylene glycol-phthalic anhydride polyester polyol (DEG / PA backbone) - avg. viscosity @ 25°C ~ 2.756 Pa·s (~ 2756 cP); Avg. ~ 350; and Hydroxyl Value (mgKOH / g) ~ 300-350 |
| Isoexter 3061 | Aromatic phthalic anhydride polyester polyol |
| Stepanpol® PC 2011-225 | Saturated polyester polyol (DEG / AA backbone) wherein AA = adipic acid) - avg. viscosity @ 25°C ~ 0.40-0.60 Pa·s (~ 400-600 cP); Avg. MW ~ 500; and Hydroxyl Value (mgKOH / g) ~ 215-235 |
| Stepanpol® PDP-70 | Hybrid phthalate anhydride polyester polyol (DEG/PA backbone) - avg. viscosity @ 25°C ~ 1.90 Pa·s (~ 1900 cP); Avg. MW ~ 1600; and Hydroxyl Value (mgKOH / g) ~ 70 |
| Stepanpol® PS-3422 | Aromatic polyester polyol |
| Stepanpol® PS-1752 | Aromatic phthalic anhydride polyester polyol (DEG / PA backbone) - avg. viscosity @ 25°C ~ 3.90 Pa·s (~ 3900 cP); Avg. MW ~ 640; and Hydroxyl Value (mgKOH / g) ~ 175 with some propylene carbonate (unspecified by the manufacturer) |

Furthermore without being bound to any one theory or mode-of-operation, it is believed that the use of glycerin as a fluoride ion scavenger may beneficially increase the shelf life stability of this product. Note that it is now possible to have significant amounts of polyester polyols and polyether polyols in the composition, provided that at least some glycerin (synonymously "glycerol") is also present, a simple triol. It is recognized that the fluoride ion scavenger will preferably have a functionality of ≥ 2.0, preferably ≥ 2.2.

Glycerin a triol with scavenging capabilities. Lower molecular weight polyols, e.g., a triol or specifically a polyol (including diols) having a functionality ≥ 2, preferably ≥ 2.2 are believed to be useful in this invention. Molecular weight ranges of the polyol(s) are anticipated to range between ~90 to ~1500 g/mol are believed to be applicable to this invention.

| *Polyether Polyol(s) (actual and potential)* | |
|---|---|
| Voranol 360 (SG-360) | 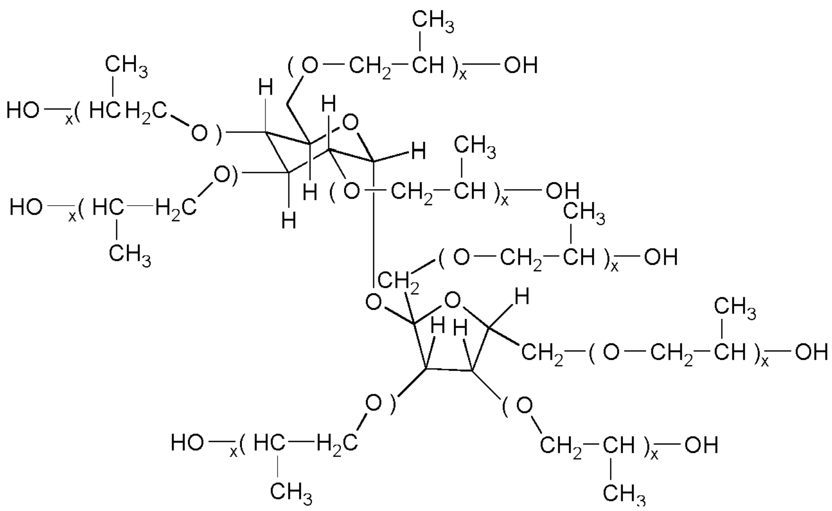 sucrose polyether polyol based on a sucrose-glycerol mixture with a functionality of ~4.5 having a hydroxyl number of ~360 wherein x ranges from 1 to 100 |
| Multranol 8114 | aromatic amine-initiated polyether polyol having a hydroxyl number of about 388 mg KOH/g and a functionality of 4 |

(continued)

| *Polyether Polyol(s) (actual and potential)* | |
|---|---|
| Poly-G® 30-280 | 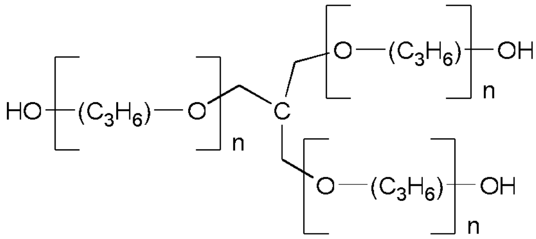 glycerin-based oxypropylated polyether polyol having a functionality greater than or equal to 3 and a molecular weight of about 600, an OH number of about 274, an acid number (max) of 0.05, an average pH of about 6.5 wherein n ranges from 2 to 50 |
| Poly-G® 30-168 | 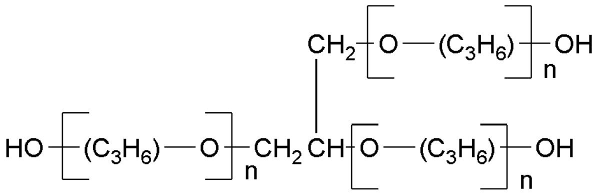 1,2,3-propanetriol, methyloxirane polymer wherein n ranges from 2 to 50 |
| Poly-G® 30-42 | Polyether triol having an average molecular weight of ~4,000, an OH number of about 40, an acid number (max) of ~0.03, an average pH of about 5.5 |
| Jeffol® G 31-35 | 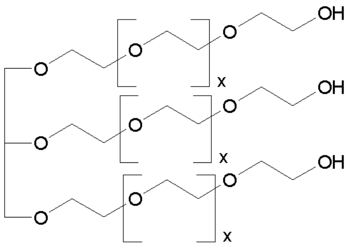 ethylene oxide triol, ethylene oxide capped, and glycerin initiated wherein the polyol has a hydroxyl number of ~35 and a M.W. of ~4800 and provides for chain entanglement and packing without distorting a profile wherein x ranges from 2 to 50. |
| Carpol TEAP-265 | 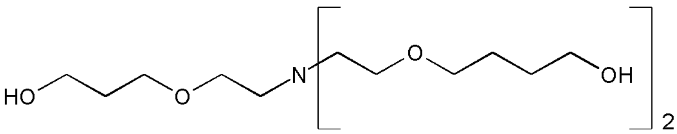 3,3',3"-[nitrilotris(ethane-2,1-diyloxy)]tripropan-1-ol |
| Poly-G® 70-600 | 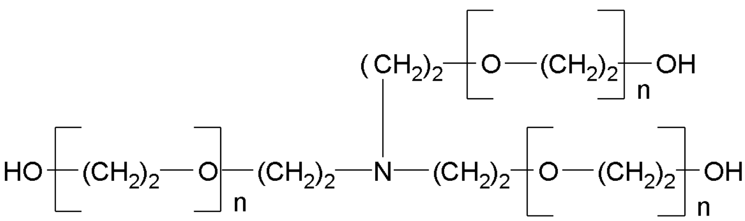 Ethoxylatedtriethanolamine wherein n ranges from 1 to 50 |

(continued)

| *Polyether Polyol(s) (actual and potential)* | |
|---|---|
| Poly-G® 55-28 | 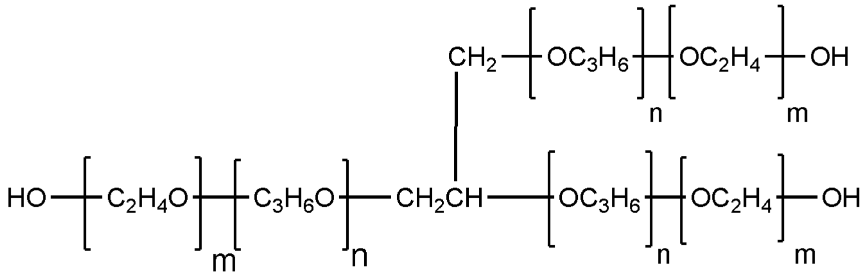 Block copolymer of propylene oxide and polyethylethylene oxide having a nominal molecular weight of 4,000 and wherein n & m are integers ranging from 2 to 50. |
| Poly-G 20-112 | Polyether polyol having a hydroxyl number of ~112 and a M.W. of ~1000 and a viscosity @ 25°C of ~ 0.145 Pa·s (~ 145 cP) |
| Poly-G 37-600 | Ethanol, 2,2' imino bis, polymer with 2-methyl oxirane, a polyether triol having a hydroxyl number of ~600 and a M.W. of ~280 and a viscosity @ 25°C of ~ 0.38 Pa·s (~ 380 cP) |

***Flame Retardants and/or Plasticizers***

As illustrated in a non-exhaustive, non-exclusive, exemplary list below, there are a myriad of flame retardants and/or plasticizers which are useful in modifying the properties of the reaction of a polyol with a diisocyanate to form a foam having varying characteristics. The ability to add widely varying amounts of flame retardants / plasticizers and/or different flame retardant / plasticizer combinations could easily be effected via either supplementing existing amounts of "B-side" flame retardant(s) / plasticizer(s) via the third stream or by essentially eliminating "B-side" flame retardant(s) / plasticizer(s) and making their addition via the third stream.

| | |
|---|---|
| Tris (1-chloro-2-propyl) phosphate ("TCPP") | 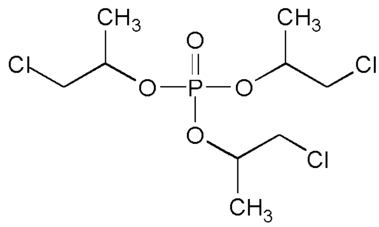 |
| Tetrabromophthalate diol ("PHT4-diol") | 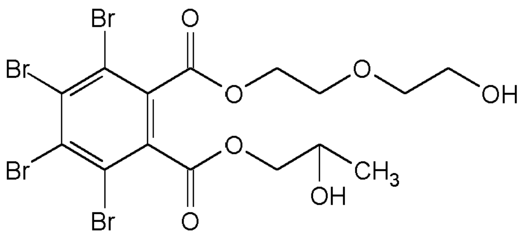 |

***Surfactants***

As illustrated in a non-exhaustive, non-exclusive, exemplary list below, there are a myriad of surfactants which are useful in modifying the properties of the reaction of a polyol with a diisocyanate to form a foam having varying characteristics. The ability to add widely varying amounts of surfactants and/or different surfactant combinations could easily be affected via either supplementing existing amounts of "B-side" surfactant(s) via the third stream or by essentially eliminating "B-side" surfactant(s) and making their addition via the third stream.

| *Trade name* | *Composition (if known)* |
|---|---|
| Tegostab® B-8433 | Polyether polydimethylsiloxane copolymer |

(continued)

| *Trade name* | *Composition (if known)* |
|---|---|
| Tegostab® B-8870 | Polyether polydimethylsiloxane copolymer |
| Dabco® LK®-443 | Non-silicone organic surfactant |
| Nonoxynol-9 | 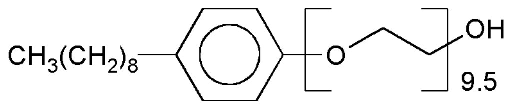 the hydroxyl number is ~88 |
| L12-8 ethoxylated alcohol (dodecyl alcohol ethoxylate) | 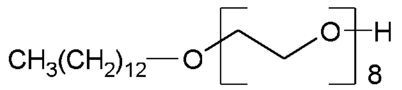 |
| Tegostab® B-8465 | Polyether polydimethylsiloxane copolymer |
| Surfonic N-95 | ethylene oxide content of 65.5% & HLB value of 13.1 |

***Catalysts***

As illustrated in a non-exhaustive, non-exclusive, exemplary list below, there are a myriad of catalysts which are useful in effecting the reaction of a polyol with a diisocyanate to form a foam having varying characteristics. The ability to add widely varying amounts of catalysts and/or different catalyst combinations could easily be affected via either supplementing existing amounts of "B-side" catalyst(s) via the third stream or by essentially eliminating "B-side" catalyst(s) and making their addition via the third stream.

| *Trade name and/or Chemical name* | *Chemical structure* |
|---|---|
| Dabco® K-15 (Potassium octoate / DEG (diethylene glycol)) | 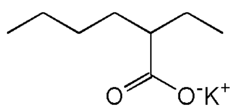 |
| Dabco® TMR-20 | Proprietary K-carboxylate composition |
| DABCO® T-120 / PC 3014 (dibutyl tin dilauryl mercaptide) | $(CH_3(CH_2)_3)_2$-Sn-$S(CH_2)_{11}CH_3$ |

| *Trade name and/or Chemical name* | *Chemical structure* |
|---|---|
| Polycat® 12 | 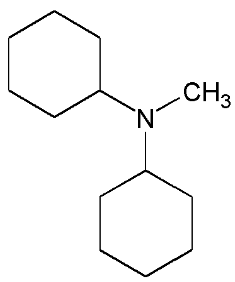 |
| DMDEE (2,2'-dimorpholinediethylether) | 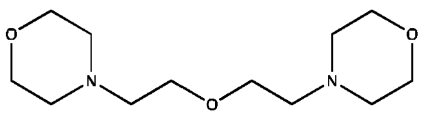 |

As better illustrated in *Fig.* 1, the desired CDR ratio under accelerated aging is only achieved when the weight ratio relationship between the weight of the catalyst containing tin ("Sn") to the weight of the catalyst containing potassium ("K") is greater than approximately 0.50, more preferably greater than approximately 0.67.

At same catalyst ratios (1:3, 2:3), the catalyst compositions with TMR-20 has greater stability. As ratio of T-120 (Sn-containing catalyst) to KC (potassium carboxylate, K-15 or TMR-20) reaches 1, resulting sprayed polyurethane foam

stability is enhanced as measured using accelerated aging testing and quantifying the CDR ratio.

***Other***

Water can be both beneficial and deleterious to catalyst foams, depending on the blowing agent used or the end-use application. The ability to add widely varying amounts of water could easily be affected via either supplementing existing amounts of "B-side" water via the third stream or by essentially eliminating "B-side" water and making its addition via the third stream of a spray gun.

Glycerin has been found to be beneficial to the reactant mix and is one specific example of a triol with scavenging capabilities, the invention is not limited to such. In fact, lower molecular weight polyols, e.g., a triol or specifically a polyol (including diols) having a functionality ≥ 2, preferably ≥ 2.2 are believed to be useful in this invention. Molecular weight ranges of the polyol(s) are anticipated to range between ~90 to ~1500 g/mol are believed to be applicable to this invention.

As illustrated in *Fig.* 2, at the same catalyst ratios, glycerin improves aging stability.

***Blowing Agent(s)***

As illustrated in a non-exhaustive, non-exclusive, exemplary list below, there are a myriad of blowing agents which are useful in effecting the reaction of a polyol with a diisocyanate to form a foam having varying characteristics. The ability to add widely varying amounts of blowing agents and/or different blowing agent combinations could easily be effected via either supplementing existing amounts of "A-side" and/or "B-side" blowing agent(s) via the third stream or by essentially eliminating blowing agent(s) and making their addition via the third stream.

In one aspect of the invention, blowing agents having up to four carbon atoms in their backbone and which are useful in this invention fall within the general formula (I) illustrated below:

$$[CV_a]_m - A - [CX_b]_n - B - [CY_c]_o - D - [CZ_d]_p$$

wherein

| | |
|---|---|
| C | is a carbon atom; |
| V, X, Y & Z | are independently selected from the group consisting of H, F and Cl; |
| a & d | are independently selected from the integral values ranging from 0 to 3 inclusive; |
| b & c | are independently selected from the integral values ranging from 0 to 2 inclusive; |
| o, p & n | are equal to 1; |
| m | is selected from the integral values ranging from 0 to 1 inclusive; |
| A, B & D | are covalent bonds sufficient to satisfy the available bonding sites of adjacent carbon atoms, if such carbon atoms are present; and the blowing agent, including miscible blends and azeotropes thereof, having a boiling point between approximately -5°C - 50°C, and an ozone depletion potential of essentially zero; and in a preferred embodiment, the blowing agent is non-flammable, recognizing that co-blowing agents may be flammable, although in a more preferred embodiment, the co-blowing agent will be added in such an amount as to render the combination non-flammable either as a blend or as an azeotrope. |

In another aspect of the invention, and listed more generically, the blowing agents having up to six carbon atoms in their backbone and which are useful in this invention fall within the general formula (II) illustrated below:

$$[CU_e]_q - E - [CW_f]_r - F - [CV_a]_m - A - [CX_b]_n - B - [CY_c]_o - D - [CZ_d]_p$$

wherein

| | |
|---|---|
| C | is a carbon atom; |

| | |
|---|---|
| U, W, V, X, Y and Z | are independently selected from the group consisting of H, F and Cl; |
| d & e | are independently selected from the integral values ranging from 0 to 3 inclusive; |
| a, b, c & f | are independently selected from the integral values ranging from 0 to 2 inclusive; |
| o, p & n | are equal to 1; |
| m, q & r | are independently selected from the integral values ranging from 0 to 1 inclusive; |
| A, B, D, E and F | are covalent bonds sufficient to satisfy the available bonding sites of adjacent carbon atoms, if such carbon atoms are present; |

the blowing agent having a boiling point between approximately -5°C - 50°C, and an ozone depletion potential of not greater than 0.05; and
in a preferred embodiment, the blowing agent is non-flammable, recognizing that co-blowing agents may be flammable, although in a more preferred embodiment, the co-blowing agent will be added in such an amount as to render the combination non-flammable either as a blend or as an azeotrope.

As illustrated in a non-exhaustive, non-exclusive, exemplary list below, there are a myriad of blowing agents which are useful in effecting the reaction of a polyol with a diisocyanate to form a foam having varying characteristics. The ability to add widely varying amounts of blowing agents and/or different blowing agent combinations could easily be effected via either supplementing existing amounts of "A-side" and/or "B-side" blowing agent(s) via the third stream or by essentially eliminating blowing agent(s) and making their addition via the third stream.

| | |
|---|---|
| HFO 1234-ze (1,3,3,3-tetrafluoropropene) | 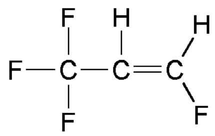 |
| HFC-245fa (1,1,1,3,3 pentafluoropentane) | 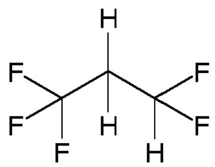 |
| Opteon 1100 (1,1,1,4,4,4 hexafluoro-2-butene ) | 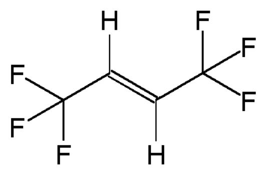 |

As used in this application, a non-limiting definition for the term "blowing agent" which includes miscible mixtures and azeotropes of blowing agents, means a propellant or solvent which are useful and provide efficacy to various applications in the form of performance, pressure performance, or solubility, without deleterious effect due to molar gas volume, flammability migration, or GWP reduction, yet which have a vapor pressure within defined limits as defined herein. Exemplary and non-limiting blowing agents include HFC-245fa (Honeywell Intl.), namely 1,1,1,3,3 pentafluoropentane or HFO-1336mzz or sold under the trade name Opteon® 1100 (Chemours), namely 1,1,1,4,4,4 hexafluoro-2-butene.

And while the above identified blowing agents are preferred from an ozone depletion potential (ODP) perspective as well as a global warming potential (GWP) perspective, the third stream within the spray gun offers the ability to use a myriad of blowing agents, alone or in combination with others, the combination in one aspect including all non-flammable blowing agents, while in another aspect including a combination of non-flammable and flammable blowing agents. A non-limiting list of other blowing agents includes, but is not limited to air, $C_1$ to $C_6$ hydrocarbons, $C_1$ to $C_8$ alcohols, ethers, diethers, aldehydes, ketones, hydrofluoroethers, $C_1$ to $C_4$ chlorocarbons, methyl formate, water, carbon dioxide, $C_3$ to $C_4$ hydrofluoroolefins, and $C_3$ to $C_4$ hydrochlorofluoroolefins. Examples of these non-exclusively include one or more of difluoromethane, trans-1,2-dichloroethylene, difluoroethane, 1,1,1,2,2-pentafluoroethane, 1,1,2,2-tetrafluoroethane,

1,1,1,2-tetrafluoroethane, 1,1,1-trifluoroethane, 1,1-difluoroethane, fluoroethane, hexafluoropropane isomers, including HFC-236fa, pentafluoropropane isomers of HFC-245fa, heptafluoropropane isomers, including HFC-227ea, hexafluorobutane isomers, and pentafluorobutane isomers including HFC-365mfc, tetrafluoropropane isomers, and trifluoropropene isomers (HFO-1243). Specifically included are all molecules and isomers of HFO-1234, including 1,1,1,2-tetrafluoropropene (HFO-1234yf), trans-1-chloro-3,3,3-trifluoropropene (HFO-1233zd(E)) sold under the trade name Solstice LBP by Honeywell and cis- and trans-1,2,3,3-tetrafluoropropene (HFO-1234ye), HFC-1233zd, and HFC-1225ye. The blowing agents may be used in combination with at least one co-blowing agent which non-exclusively include: hydrocarbons, methyl formate, halogen containing compounds, especially fluorine containing compounds and chlorine containing compounds such as halocarbons, fluorocarbons, chlorocarbons, fluorochlorocarbons, halogenated hydrocarbons such as hydrofluorocarbons, hydrochlorocarbons, hydrofluorochlorocarbons, hydrofluoroolefins, hydrochlorofluoroolefins, $CO_2$, $CO_2$ generating materials such as water, and organic acids that produce $CO_2$ such as formic acid. Examples non-exclusively include low-boiling, aliphatic hydrocarbons such as ethane, propane(s), i.e. normal pentane, isopropane, isopentane and cyclopentane; butanes(s), i.e. normal butane and isobutane; ethers and halogenated ethers; trans 1,2-dichloroethylene, pentafluorobutane; pentafluoropropane; hexafluoropropane; and heptafluoropropane; 1-chloro-1,2,2,2-tetrafluoroethane (HCFC-124); and 1,1-dichloro-1-fluoroethane (HCFC-141b) as well as 1,1,2,2-tetrafluoroethane (HFC-134); 1,1,1,2-tetrafluoroethane (HFC-134a); 1-chloro 1,1-difluoroethane (HCFC-142b); 1,1,1,3,3-pentafluorobutane (HFC-365mfc); 1,1,1,2,3,3,3-heptafluoropropane (HCF-227ea); trichlorofluoromethane (CFC-11), dichlorodifluoromethane (CFC-12); 1,1,1,3,3,3-hexafluoropropane (HFC-236fa); 1,1,1,2,3,3-hexafluoropropane (HFC-236ea); difluoromethane (HFC-32); difluoroethane (HFC-152a); trifluoropropenes, pentafluoropropenes, chlorotrifluoropropenes, tetrafluoropropenes including 1,1,1,2-tetrafluoropropene (HFO-1234yf), 1,1,1,2,3-pentafluoropropene (HFO-1225ye), and 1-chloro-3,3,3-trifluoropropene (HCFC-1233zd). Combinations of any of the aforementioned are useful including blends and azeotropes thereof. The relative amount of any of the above noted additional co-blowing agents, as well as any additional components included in present compositions, can vary widely within the general broad scope of the present invention according to the particular application for the composition, and all such relative amounts are considered to be within the scope hereof.

As used herein, a non-limiting definition for the term "co-blowing agent" which includes mixtures or miscible blends and/or azeotropes of blowing agents, means a one or more co-blowing agents, co-propellants, or co-solvents which are useful and provide efficacy to various applications in the form of performance, pressure performance, or solubility, without deleterious effect due to molar gas volume, flammability mitigation, or GWP reduction. These co-agents include but are not limited to those described previously.

Characteristics of the various synthesized additives may be characterized at least in part by the following Examples and Tables. It is noted that the catalyst ratio is important when considering that all tin catalysts are very aggressive gelation catalysts that drive the urethane reaction while the K-15 and TMR-20 catalysts are slower reaction trimerization catalysts. The relatively "softer" polyurethane reaction is being driven faster than the more "rigid" polyisocyanurate reaction. It is therefore, not particularly surprising that high ratios of tin catalyst in comparison to the trimerization catalysts would result in cured foams having poor dimensional stability.

The use of T-120 by itself produces poor dimensional stability results (even though it passes CDR). Therefore, it is not possible to simply use TMR-20 (or even K15), i.e., the potassium containing catalyst, as it is too slow and does not facilitate passing insulation properties (even though it passes CDR). What has been learned through experimentation is that it is important to combine the speed of T-120, Sn-containing catalyst, with the dimensional stability of the potassium-containing catalyst. This has to be done at certain ratios: if the tin to potassium catalyst is too low, it fails CDR. If that same ratio is too high, and it tends to fail on dimensional stability.

And yet when looking at the broader picture, and without being held to any theory or mode of operation, glycerin imparts greater reactivity stability over time. If glycerin is taken out of the reactants, reactivity stability suffers. We then attempted to expand on the types of polyols we could use in this system. Experimentation which included keeping the hydroxyl numbers of the blends relatively constant, it was determined that all systems passed reactivity stability, i.e., passing CDR criteria, but some maintained physical properties, others faded and failed.

Unlike the Prior Art, these polyurethane reactant systems can now utilize systems with pure polyether and unlike previous systems, can include an aggressive catalyst package to make insulation spray foam (as opposed to just an adhesive).

All experiments in this application employed the following recognizing that the exact percentages can vary and still produce acceptable polyurethane foam. Each can was pressurized to between 9.0-17.2 bar (130-250 psi) (typically using an inert gas, e.g., nitrogen):

| All Cans* | A-side | B-side |
|---|---|---|
| PMDI | 93% | |
| Respective blend | | 86% |

(continued)

| All Cans* | A-side | B-side |
|---|---|---|
| 1234ze | 7% | 14% |
| | 100% | 100% |

Optimal A/B Ratio ~ 1:1

*Table #1*

| | | KB-1 | YB-1 | KB-2 | YB-2 | YB-3 |
|---|---|---|---|---|---|---|
| ***Polyol(s)*** | *OH #* | % | % | % | % | % |
| PS-2352 / Isoexter 4404 | 240 | 17.00 | 17.00 | 17.00 | 17.00 | 16.70 |
| TB-350 | 350 | 32.60 | 32.60 | 32.10 | 32.10 | 32.00 |
| ***Plasticizer*** | | | | | | |
| TCPP | 0 | 36.60 | 36.60 | 36.60 | 36.60 | 36.60 |
| ***Flame Retardant*** | | | | | | |
| PHT4-Diol | 218 | 5.00 | 5.00 | 5.00 | 5.00 | 5.00 |
| ***Surfactant(s)*** | | | | | | |
| B8870 | 60 | 3.00 | 3.00 | 3.00 | 3.00 | 3.00 |
| L-31 | 103 | -- | -- | -- | -- | -- |
| ***Catalyst(s)*** | | | | | | |
| Dabco® K-15 | 271 | 1.50 | -- | 1.50 | -- | -- |
| Dabco® T-120 / PC3014 | 0 | 0.50 | 0.50 | 1.00 | 1.00 | 3.00 |
| Dabco® TMR-20 | 850 | -- | 1.50 | -- | 1.50 | -- |
| ***Other Additive(s)*** | | | | | | |
| Water | 6233 | 2.00 | 2.00 | 2.00 | 2.00 | 1.80 |
| Glycerin | 1829 | 1.80 | 1.80 | 1.80 | 1.80 | 1.90 |
| Compares directly to: | | -- | KB-1 | KB-1 | KB-2 | -- |
| T-120:PC ratio | | 1:3 | 1:3 | 2:3 | 2:3 | T-120 |
| CDR (6 months) | | 2.12 | 1.96 | 1.95 | 1.41 | 0.91 |
| CDR (12 months) | | 2.85 | 3.00 | 2.42 | 1.83 | 0.96 |
| Reactivity Assessment (Pass / Fail)* | | Fail | Fail | Borderline | Pass | Pass |
| Phys. Property Assessment (Pass / Fail)** | | Fail | Fail | Borderline | Pass | Fail |
| Maximum Dimensional Stability Value | | 3.64 | 4.33 | 4.76 | 4.27 | 37.42 |
| Minor changes impact properties --> formulation sensitivity (lack of robustness). | | | | | | |
| * CDR < 2 - Pass; 2 < CDR <2.5 - Borderline; CDR > 2.5 - Fail | | | | | | |
| ** To pass, density cannot exceed past ±8 mg/cm³ (+/- 0.5 pcf) of initial, RSI-value must be above 0.97 K·m²/W (R-value 5.5 °F·Ft²·h/BTU), closed cell content > 85%, compression > 0.7 bar (10 psi), dimensional stability < +/-7% | | | | | | |

*Table I (continued)*

| | | YB-4 | NB-1 | A-5 | A-2 | A-1 |
|---|---|---|---|---|---|---|
| ***Polyol(s)*** | *OH #* | % | % | % | % | % |
| PS-2352 / Isoexter 4404 | 240 | 16.70 | 19.30 | 15.90 | 15.20 | 15.30 |
| TB-350 | 350 | 32.00 | 35.30 | 34.70 | 35.40 | 35.50 |
| ***Plasticizer*** | | | | | | |
| TCPP | 0 | 36.60 | 36.60 | 36.60 | 36.60 | 36.60 |
| ***Flame Retardant*** | | | | | | |
| PHT4-Diol | 218 | 5.00 | -- | 5.00 | 5.00 | 5.00 |
| ***Surfactant(s)*** | | | | | | |
| B8870 | 60 | 3.00 | 3.00 | 3.00 | 2.00 | 2.00 |
| L-31 | 103 | -- | -- | -- | 1.00 | 1.00 |
| ***Catalyst(s)*** | | | | | | |
| Dabco® K-15 | 271 | -- | -- | | -- | -- |
| Dabco® T-120 / PC3014 | 0 | -- | 0.90 | 0.50 | 0.80 | 0.80 |
| Dabco® TMR-20 | 850 | 3.00 | 1.35 | 1.00 | 1.00 | 0.80 |
| ***Other Additive(s)*** | | | | | | |
| Water | 6233 | 1.80 | 1.80 | 1.50 | 1.50 | 1.50 |
| Glycerin | 1829 | 1.90 | 1.80 | 1.80 | 1.50 | 1.50 |
| Compares directly to: | | -- | YB-2 | YB-2 | YB-2 | YB-2 |
| T-120:PC ratio | | TMR-20 | 2:3 | 1:2 | 4:5 | 1:1 |
| CDR (6 months) | | 0.97 | 1.54 | 1.44 | 1.67 | 1.50 |
| CDR (12 months) | | 1.29 | 1.94 | 2.08 | 1.50 | 1.40 |
| Reactivity Assessment (Pass / Fail)* | | Pass | Pass | Borderline | Pass | Pass |
| Phys. Property Assessment (Pass / Fail)** | | Fail | Pass | Borderline | Pass | Fail |
| Maximum Dimensional Stability Value | | 2.09 | 2.33 | 2.49 | 6.93 | 8.94 |
| Minor changes impact properties --> formulation sensitivity (lack of robustness). | | | | | | |
| * CDR < 2 - Pass; 2 < CDR <2.5 - Borderline; CDR > 2.5 - Fail | | | | | | |
| ** To pass, density cannot exceed past $\pm$8 mg/cm$^3$ (+/- 0.5 pcf) of initial, RSI-value must be above 0.97 K·m$^2$/W (R-value 5.5 °F·Ft$^2$·h/BTU), closed cell content > 85%, compression > 0.7 bar (10 psi), dimensional stability < +/-7% | | | | | | |

*Table #2 (glycerin vs. no glycerin)*

| | | Glycerin | | | No Glycerin | | |
|---|---|---|---|---|---|---|---|
| | | A-5 | NB-1 | A-1 | NG-1 | NG-2 | NG-3 |
| ***Polyol(s)*** | OH # | % | % | % | % | % | % |
| PS-2352 / Isoexter 4404 | 240 | 15.90 | 15.20 | 15.30 | 15.90 | 20.20 | 16.00 |
| TB-350 | 350 | 34.70 | 35.40 | 35.50 | 36.50 | 36.30 | 36.20 |
| ***Plasticizer*** | | | | | | | |
| TCPP | 0 | 36.60 | 36.60 | 36.60 | 36.60 | 36.60 | 36.60 |

(continued)

| | | | | | | | |
|---|---|---|---|---|---|---|---|
| ***Flame Retardant*** | | | | | | | |
| PHT4-Diol | 218 | 5.00 | 5.00 | 5.00 | 5.00 | -- | 5.00 |
| ***Surfactant(s)*** | | | | | | | |
| B8870 | 60 | 3.00 | 2.00 | 2.00 | 2.00 | 3.00 | 2.00 |
| L-31 | 103 | -- | 1.00 | 1.00 | 1.0 | -- | 1.0 |
| ***Catalyst(s)*** | | | | | | | |
| Dabco® T-120 / PC3014 | 0 | 0.50 | 0.80 | 0.80 | 0.50 | 0.90 | 0.80 |
| Dabco® TMR-20 | 850 | 1.00 | 1.00 | 0.80 | 1.00 | 1.35 | 0.80 |
| ***Other Additive(s)*** | | | | | | | |
| Water | 6233 | 1.50 | 1.50 | 1.50 | 1.50 | 1.65 | 1.60 |
| Glycerin | 1829 | 1.80 | 1.50 | 1.50 | -- | -- | -- |
| Compares directly to: | | YB-2 | YB-2 | YB-2 | A-5 | NB-1 | A-1 |
| T-120:PC ratio | | 1:2 | 4:5 | 1:1 | 1:2 | 2:3 | 1:1 |
| CDR (6 months) | | 1.44 | 1.67 | 1.50 | 2.12 | 2.11 | 2.39 |
| CDR (12 months) | | 2.08 | 1.50 | 1.40 | 2.76 | 2.67 | 1.83 |
| Reactivity Assessment (Pass / Fail)* | | Borderline | Pass | Pass | Fail | Fail | Borderline |
| Phys. Property Assessment (Pass / Fail)** | | Borderline | Pass | Fail | Fail | Fail | Borderline |
| Maximum Dimensional Stability Value | | 2.49 | 6.93 | 8.94 | 2.49 | 2.31 | - |
| Minor changes impact properties --> formulation sensitivity (lack of robustness). | | | | | | | |
| * CDR < 2 - Pass; 2 < CDR <2.5 - Borderline; CDR > 2.5 - Fail | | | | | | | |
| ** To pass, density cannot exceed past ±8 mg/cm$^3$ (+/- 0.5 pcf) of initial, RSI-value must be above 0.97 K·m$^2$/W (R-value 5.5 °F.Ft$^2$·h/BTU), closed cell content > 85%, compression > 0.7 bar (10 psi), dimensional stability < +/-7% | | | | | | | |

*Table #3 (Expanded Polyol Testing)*

| | | Polyol Swap | | | | | | | |
|---|---|---|---|---|---|---|---|---|---|
| | | A-4 | PI-1 | PI-2 | PI-3 | PI-4 | PI-5 | PI-6 | F-1 |
| ***Polyol(s)*** | *OH #* | % | % | % | % | % | % | % | % |
| PS-2352 / COIM 4404 | 240 | 35.50 | -- | -- | -- | -- | -- | -- | -- |
| TB-350 | 350 | 15.30 | -- | -- | -- | -- | -- | -- | -- |
| PS-1752 | 240 | -- | 16.00 | -- | 16.50 | -- | -- | -- | -- |
| PS-3152 | 321 | -- | 38.50 | -- | -- | -- | -- | -- | -- |
| Isoexter 3061-US | 315 | -- | -- | 37.80 | 38.00 | -- | -- | -- | -- |
| Stepanpol® PC 2011-225 | 225 | -- | -- | 11.50 | -- | -- | -- | 24.50 | -- |
| Stepanpol® PDP-70 | 70 | -- | -- | 5.00 | -- | -- | -- | -- | -- |
| SG-360 | 360 | -- | -- | -- | -- | 38.00 | -- | -- | 42.20 |
| Poly-G 20-112 | 112 | -- | -- | -- | -- | 16.50 | 17.00 | -- | 24.50 |
| Poly-G 30-168 | 168 | -- | -- | -- | -- | -- | 23.30 | -- | -- |
| Poly-G 37-600 | 600 | -- | -- | -- | -- | -- | 1430 | -- | -- |

(continued)

| | | Polyol Swap | | | | | | | |
|---|---|---|---|---|---|---|---|---|---|
| | | A-4 | PI-1 | PI-2 | PI-3 | PI-4 | PI-5 | PI-6 | F-1 |
| ***Polyol(s)*** | *OH #* | % | % | % | % | % | % | % | % |
| PS-3422 | 350 | -- | -- | -- | -- | -- | -- | 29.80 | -- |
| ***Plasticizer*** | | | | | | | | | |
| TCPP | 0 | 36.60 | 36.60 | 36.60 | 36.60 | 3.60 | 36.60 | 36.60 | 21.00 |
| ***Flame Retardant*** | | | | | | | | | |
| PHT4-Diol | 218 | 5.00 | -- | -- | -- | -- | -- | -- | -- |
| ***Surfactant(s)*** | | | | | | | | | |
| B8870 | 60 | 2.00 | 3.00 | 3.00 | 3.00 | 3.00 | 3.00 | 3.00 | -- |
| L-31 | 103 | 1.0 | -- | -- | -- | -- | -- | -- | -- |
| B8465 | 0 | -- | -- | -- | -- | -- | -- | -- | -- |
| Surfonic N-95 | 88 | -- | -- | -- | -- | -- | -- | -- | -- |
| ***Catalyst(s)*** | | | | | | | | | |
| Dabco® K-15 (KC) | 271 | -- | -- | -- | -- | -- | -- | -- | -- |
| Dabco® T-120 / PC3014 | 0 | 0.80 | 0.90 | 0.90 | 0.90 | 0.90 | 0.80 | 0.90 | 0.10 |
| Dabco® TMR-20 (KC) | 850 | 0.80 | 1.35 | 1.35 | 1.35 | 1.35 | 1.20 | 1.35 | 0.15 |
| ***Other Additive(s)*** | | | | | | | | | |
| Water | 6233 | 1.50 | 1.80 | 1.80 | 1.80 | 1.80 | 1.80 | 1.80 | 2.0 |
| Glycerin | 1829 | 1.50 | 1.85 | 2.05 | 1.85 | 1.85 | 2.05 | 2.05 | 4.0 |
| Compares directly to: | | A-1 | NB-1 | NB-1 | NB-1 | NB-1 | NB-1 | NB-1 | P-4 |
| T-120:PC ratio | | 1:1 | 2:3 | 2:3 | 2:3 | 2:3 | 2:3 | 2:3 | 2:3 |
| CDR (6 months) | | 1.90 | 1.57 | 1.28 | 0.88 | 0.84 | 1.09 | 1.23 | 1.20 |
| CDR (12 months) | | 1.38 | 1.78 | 1.33 | 1.04 | 1.13 | 1.13 | 1.53 | N/A |
| Reactivity Assessment (Pass / Fail)* | | Pass | Pass | Pass | Pass | Pass | Pass | Pass | Pass |
| Phys. Property Assessment (Pass / Fail)** | | Pass | Pass | Fail | Fail | Pass | Fail | Pass | Pass |
| Maximum Dimensional Stability Value | | 4.56 | 2.15 | -2.14 | 1.02 | 0.87 | -4.52 | 1.76 | -- |
| * CDR < 2 - Pass; 2 < CDR <2.5 - Borderline; CDR > 2.5 - Fail<br>** To pass, density cannot exceed past ±8 mg/cm$^3$ (+/- 0.5 pcf) of initial, RSI-value must be above 0.97 K·m$^2$/W (R-value 5.5 °F·Ft$^2$·h/BTU), closed cell content > 85%, compression > 0.7 bar (10 psi), dimensional stability < +/-7% | | | | | | | | | |

*Table #3 (Expanded Polyol Testing)*

| | | E17-1 | E17-3 | E31-3 |
|---|---|---|---|---|
| ***Polyol(s)*** | *OH #* | % | % | % |
| PS-2352 / COIM 4404 | 240 | -- | -- | -- |
| TB-350 | 350 | 37.00 | 37.70 | -- |
| PS-1752 | 240 | 14.50 | 14.25 | 12.05 |

(continued)

| | | E17-1 | E17-3 | E31-3 |
|---|---|---|---|---|
| ***Polyol(s)*** | *OH #* | % | % | % |
| PS-3152 | 321 | -- | -- | -- |
| Isoexter 3061-US | 315 | -- | -- | 39.00 |
| Stepanpol® PC 2011-225 | 225 | -- | -- | -- |
| Stepanpol® PDP-70 | 70 | -- | -- | -- |
| SG-360 | 360 | -- | -- | -- |
| Poly-G 20-112 | 112 | -- | -- | -- |
| Poly-G 30-168 | 168 | -- | -- | -- |
| Poly-G 37-600 | 600 | -- | -- | -- |
| PS-3422 | 350 | -- | -- | -- |
| ***Plasticizer*** | | | | |
| TCPP | 0 | 40.50 | 40.50 | 40.50 |
| ***Flame Retardant*** | | | | |
| PHT4-Diol | 218 | 3.00 | 3.00 | 3.00 |
| ***Surfactant(s)*** | | | | |
| B8870 | 60 | 2.00 | 3.00 | 3.00 |
| L-31 | 103 | -- | -- | -- |
| B8465 | 0 | -- | -- | -- |
| Surfonic N-95 | 88 | -- | -- | -- |
| ***Catalyst(s)*** | | | | |
| Dabco® K-15 (KC) | 271 | -- | -- | -- |
| Dabco® T-120 / PC3014 | 0 | 0.60 | 0.45 | 0.60 |
| Dabco® TMR-20 (KC) | 850 | 0.90 | 0.60 | 0.90 |
| Polycat® 12 | 0 | 0.10 | 0.10 | 0.10 |
| ***Other Additive(s)*** | | | | |
| Water | 6233 | 1.55 | 1.55 | 1.55 |
| Glycerin | 1829 | 1.85 | 1.85 | 2.30 |
| Compares directly to: | | T-1 | E17-1 | PI-3 |
| T-120:PC ratio | | 0.67 | 0.75 | 0.67 |
| CDR (6 months) | | 1.40 | 1.46 | 1.27 |
| CDR (12 months) | | 1.85 | 1.67 | 1.69 |
| Reactivity Assessment (Pass / Fail)* | | Pass | Pass | Pass |
| Phys. Property Assessment (Pass / Fail)** | | Pass | Pass | Pass |
| Maximum Dimensional Stability Value | | 4.81 | 3.14 | 4.76 |

* CDR < 2 - Pass; 2 < CDR <2.5 - Borderline; CDR > 2.5 - Fail
** To pass, density cannot exceed past $\pm$8 mg/cm$^3$ (+/- 0.5 pcf) of initial, RSI-value must be above 0.97 K·m$^2$/W (R-value 5.5 °F·Ft$^2$·h/BTU), closed cell content > 85%, compression > 0.7 bar (10 psi), dimensional stability < +/-7%

*Table #3 (Expanded Polyol Testing - continued)*

| | | Tertiary Amine Addition | | | | | | |
|---|---|---|---|---|---|---|---|---|
| | | T-1 | T-2 | T-3 | T-4 | T-5 | T-6 | T-7 |
| ***Polyol(s)*** | *OH #* | % | % | % | % | % | % | % |
| PS-2352 / COIM 4404 | 240 | 19.60 | 19.50 | 19.50 | 19.50 | 19.30 | 19.30 | -- |
| TB-350 | 350 | 35.10 | 35.20 | 35.20 | 35.20 | 35.20 | 35.00 | -- |
| SG-360 | 360 | | | | | | | 36.00 |
| Poly-G 20-112 | 112 | | | | | | | 13.85 |
| Poly-G 30-168 | 168 | -- | -- | -- | -- | -- | -- | -- |
| Poly-G 37-600 | 600 | -- | -- | -- | -- | -- | -- | -- |
| PS-3422 | 350 | -- | -- | -- | -- | -- | -- | -- |
| ***Plasticizer*** | | | | | | | | |
| TCPP | 0 | 36.60 | 36.60 | 36.60 | 36.60 | 36.60 | 36.60 | 36.60 |
| ***Flame Retardant*** | | | | | | | | |
| PHT4-Diol | 218 | -- | -- | -- | -- | -- | -- | 5.00 |
| ***Surfactant(s)*** | | | | | | | | |
| B8870 | 60 | 3.00 | 3.00 | 3.00 | 3.00 | 3.00 | 3.00 | 33.00 |
| L-31 | 103 | -- | -- | -- | -- | -- | -- | -- |
| B8465 | 0 | -- | -- | -- | -- | -- | -- | -- |
| Surfonic N-95 | 88 | -- | -- | -- | -- | -- | -- | -- |
| ***Catalyst(s)*** | | | | | | | | |
| Dabco® K-15 (KC) | 271 | -- | -- | -- | -- | -- | -- | -- |
| Dabco® T-120 / PC3014 | 0 | 0.85 | 0.80 | 0.70 | 0.50 | 0.85 | 0.80 | 0.90 |
| Dabco® TMR-20 (KC) | 850 | 1.20 | 1.20 | 1.05 | 0.75 | 1.25 | 1.20 | 1.20 |
| Polycat® 12 | 0 | 0.10 | 0.25 | 0.50 | 1.00 | - | - | 0.10 |
| DMDEE | 0 | -- | -- | -- | -- | 0.35 | 0.70 | -- |
| ***Other Additive(s)*** | | | | | | | | |
| Water | 6233 | 1.65 | 1.65 | 1.65 | 1.65 | 1.65 | 1.65 | 1.50 |
| Glycerin | 1829 | 1.80 | 1.80 | 1.80 | 1.80 | 1.80 | 1.80 | 1.85 |
| Compares directly to: | | NB-1 | NB-1 | NB-1 | NB-1 | NB-1 | NB-1 | P-4 |
| T-120:PC ratio | | 0.71 | 0.67 | 0.67 | 0.67 | 0.68 | 0.67 | 0.75 |
| CDR (6 months) | | 1.53 | 2.23 | -- | 2.25 | -- | 2.26 | 1.54 |
| CDR (12 months) | | 1.88 | 3.00 | 3.38 | -- | 2.61 | 4.21 | N/A |
| Reactivity Assessment (Pass / Fail)* | | Pass | Pass | Pass | Borderline | Fail | Fail | Pass |
| Phys. Property Assessment (Pass / Fail)** | | Pass | Fail | Fail | Fail | Fail | Fail | Pass |
| Maximum Dimensional Stability Value | | 4.85 | 1.23 | 4.45 | 6.41 | -- | -- | -0.75 |
| * CDR < 2 - Pass; 2 < CDR <2.5 - Borderline; CDR > 2.5 - Fail<br>** To pass, density cannot exceed past ±8 mg/cm$^3$ (+/- 0.5 pcf) of initial, RSI-value must be above 0.97 K·m$^2$/W (R-value 5.5 °F·Ft$^2$·h/BTU), closed cell content > 85%, compression > 0.7 bar (10 psi), dimensional stability < +/-7% | | | | | | | | |

As illustrated in the table, minor changes impact properties which is indicative of formulation sensitivity (lack of robustness).

As illustrated in *Fig.* 3, higher ratios of T-120 work to the detriment of dimensional stability. As seen in *Fig.* 4, All formulas PI-1 through PI-6 pass reactivity stability (CDR < 2.0).

Higher ratios of T-120:potassium-containing catalyst harms dimensional stability. Using only a T-120 catalyst merits obscene dimensional stability results. Using only TMR-20 as the system catalyst does not yield passing insulation properties, nor does it come close to desired reactivity rates (though it does pass dimensional stability).

This is an extremely sensitive catalyst package: decreasing the ratio of tin catalyst (T-120) to potassium catalyst (K-15, TMR-20) increases CDR and reduces reactivity stability. The selection of potassium catalyst can and does affect CDR. For these formulas, TMR-20 seems to be more stable than K-15 at similar catalyst ratios.

Glycerine seems to enhance formula reactivity stability over time. Polyol ratios are important, noting that PS-2352 contains some amine, for instance. The selection of polyols can and do significantly change physical properties, physical property drift, and reaction mechanics.

A series of physical properties for the polyurethanes using the various combination of catalysts above will now be summarized.

*Table #4 Physical Properties Characterization*

| *KB-1* | Initial | 3 months | 6 months | 9 months | 12 months | Δ |
|---|---|---|---|---|---|---|
| Gel, s | 26 | 40 | 55 | -- | 74 | 48 |
| Tack, s | 40 | 70 | 105 | -- | 186 | 146 |
| A/B | 1.17 | 1.14 | 1.11 | -- | 1.09 | 0.08 |
| Density, $mg/cm^3$ (Pcf) | 31.08 (1.94) | 32.84 (2.05) | 34.76 (2.17) | -- | 34.44 (2.15) | 3.68 (0.23) |
| RSI, $K\cdot m^2/W$ (R, $°F\cdot Ft^2\cdot h/BTU$) | 1.17 (6.64) | 1.12 (6.37) | 1.11 (6.33) | -- | 1.02 (5.8) | 0.15 (0.84) |
| II comp. | 16.43 | 18.47 | 16.99 | -- | 16.91 | 2.04 |
| %CCC | 95.17 | 95.02 | 93.01 | -- | -- | 2.16 |
| Dim Stab. | 3.64 | 2.69 | -- | -- | -- | |
| CDR | 1.00 | 1.53 | 2.12 | -- | 2.85 | |
| *YB-1* | Initial | 3 months | 6 months | 9 months | 12 months | Δ |
| Gel, s | 23 | -- | 45 | -- | 69 | 46 |
| Tack, s | 32 | -- | 71 | -- | 95 | 63 |
| A/B | 1.04 | -- | 1.23 | -- | 0.87 | 0.36 |
| Density, $mg/cm^3$ (pcf) | 33.00 (2.06) | -- | 34.44 (2.15) | -- | 33.80 (2.11) | 1.44 (0.09) |
| RSI, $K\cdot m^2/W$ (R, $°F\cdot Ft^2\cdot h/BTU$) | 1.22 (6.93) | -- | 1.13 (6.39) | -- | -- | 0.09 (0.54) |
| II comp. | 19.88 | -- | 22.85 | -- | -- | 2.97 |
| %CCC | 94.51 | -- | 96.01 | -- | -- | 1.5 |
| Dim Stab. | 4.33 | -- | -- | -- | -- | |
| CDR | 1.00 | -- | 1.96 | -- | 3.00 | |
| *KB-2* | Initial | 3 months | 6 months | 9 months | 12 months | Δ |
| Gel, s | 19 | 25 | 37 | 45 | 46 | 27 |
| Tack, s | 30 | 32 | 54 | 67 | 66 | 37 |
| A/B | 1.12 | 1.1 | 1.06 | 1.03 | 1.03 | 0.09 |
| Density, $mg/cm^3$ (pcf) | 29.63 (1.85) | 32.20 (2.01) | 34.28 (2.14) | 33.32 (2.08) | 34.44 (2.15) | 4.81 (0.3) |
| RSI, $K\cdot m^2/W$ (R, $°F\cdot Ft^2\cdot h/BTU$) | 1.19 (6.73) | 1.16 (6.61) | 1.16 (6.60) | 1.14 (6.45) | 1.08 (6.15) | 0.11 (0.58) |
| II comp. | 11.38 | 17.01 | 16.83 | 17.91 | 16.7 | 6.53 |
| %CCC | 96.8 | 97.09 | 95.69 | 94.21 | 95.89 | 2.88 |

(continued)

| *KB-2* | Initial | 3 months | 6 months | 9 months | 12 months | Δ |
|---|---|---|---|---|---|---|
| Dim Stab. | 4.07 | 3.20 | 4.76 | -- | 4.50 | |
| CDR | 1.00 | 1.32 | 1.95 | 2.37 | 2.42 | |

*Table #4 Physical Properties Characterization (continued)*

| *YB-2* | Initial | 3 months | 6 months | 9 months | 12 months | Δ |
|---|---|---|---|---|---|---|
| Gel, s | 18 | -- | 22 | -- | 33 | 15 |
| Tack, s | 23 | -- | 29 | -- | 43 | 20 |
| A/B | 1.04 | -- | 1.08 | -- | 1.03 | 0.05 |
| Density, mg/cm$^3$ (pcf) | 29.47 (1.84) | -- | 33.96 (2.12) | -- | 34.28 (2.14) | 4.81 (0.3) |
| RSI, K·m$^2$/W (R, °F·Ft$^2$·h/BTU) | 1.22 (6.92) | -- | 1.15 (6.51) | -- | 1.13 (6.41) | 0.09 (0.51) |
| II comp. | 10.15 | -- | 13.51 | -- | 11.93 | 3.36 |
| %CCC | 94.96 | -- | 94.93 | -- | 94.21 | 0.75 |
| Dim Stab. | 3.24 | -- | 2.16 | -- | 4.27 | |
| CDR | 1.00 | -- | 1.22 | -- | 1.83 | |
| *YB-3* | Initial | 3 months | 6 months | 9 months | 12 months | Δ |
| Gel, s | 23 | 21 | 21 | 19 | 22 | 4 |
| Tack, s | 30 | 30 | 29 | 24 | 40 | 16 |
| A/B | 0.9 | 0.93 | 0.99 | 0.96 | 0.92 | 0.09 |
| Density, mg/cm$^3$ (pcf) | 34.28 (2.14) | 40.05 (2.5) | 40.85 (2.55) | 42.13 (2.63) | -- | 7.85 (0.49) |
| RSI, K·m$^2$/W (R, °F·Ft$^2$·h/BTU) | 1.18 (6.72) | 1.25 (7.12) | 1.26 (7.18) | 1.20 (6.81) | -- | 0.08 (0.46) |
| II comp. | 8.39 | 9.18 | 12.82 | 11.27 | -- | 4.43 |
| %CCC | 81.08 | 91.81 | 90.16 | 91.36 | -- | 10.73 |
| Dim Stab. | -- | -- | -- | 37.42 | -- | |
| CDR | 1.00 | 0.70 | 0.70 | 0.63 | 0.73 | |
| *YB-4* | Initial | 3 months | 6 months | 9 months | 12 months | Δ |
| Gel, s | 108 | 120 | 105 | 105 | 140 | 35 |
| Tack, s | 125 | 138 | 130 | 135 | 160 | 35 |
| A/B | 1.23 | 0.95 | 1.01 | 1.12 | 1.06 | 0.28 |
| Density, mg/cm$^3$ (pcf) | 26.11 (1.63) | 30.27 (1.89) | 28.83 (1.8) | 27.55 (1.72) | 29.15 (1.82) | 4.16 (0.26) |
| RSI, K·m$^2$/W (R, °F·Ft$^2$·h/BTU) | 0.76 (4.32) | 0.81 (4.58) | 0.74 (4.22) | 0.78 (4.43 ) | 0.74 (4.21) | 0.07 (0.37) |
| II comp. | 14.74 | 10.8 | 14.42 | 13.87 | 14.78 | 3.98 |
| %CCC | 23.77 | 11.38 | 14.57 | 21.12 | 31.17 | 19.79 |
| Dim Stab. | -1.01 | 2.09 | -- | -- | -- | |
| CDR | 1.00 | 1.11 | 0.97 | 0.97 | 1.30 | |

*Table #4 Physical Properties Characterization (continued)*

| *NB-1* | Initial | 3 months | 6 months | 9 months | 12 months | Δ |
|---|---|---|---|---|---|---|
| Gel, s | 18 | 23 | 27 | | 34 | 17 |
| Tack, s | 22 | 30 | 38 | | 50 | 28 |
| A/B | 1.09 | 1.09 | 1.04 | | 0.96 | 0.14 |
| Density, $mg/cm^3$ (pcf) | 29.31 (1.83) | 33.16 (2.07) | 32.52 (2.03) | | 35.08 (2.19) | 5.93 (0.37) |
| RSI, $K \cdot m^2/W$ (R, $°F \cdot Ft^2 \cdot h/BTU$) | 1.16 (6.56) | 1.17 (6.64) | 1.15 (6.51) | | 1.12 (6.35) | 0.05 (0.29) |
| II comp. | 17.6 | 21.0 | 15.9 | | 16.0 | 5.10 |
| %CCC | 94.3 | 99.4 | 93.3 | | 93.6 | 6.13 |
| Dim Stab. | 2.53 | 1.92 | 5.37 | | 6.10 | |
| CDR | 1.00 | 1.31 | 1.54 | | 1.94 | |
| *A-5* | Initial | 3 months | 6 months | 9 months | 12 months | Δ |
| Gel, s | 25 | 36 | 46 | -- | 52 | 27 |
| Tack, s | 30 | 72 | 92 | -- | 123 | 93 |
| A/B | 1.16 | 1.1 | 1.24 | -- | 1.13 | 0.14 |
| Density, $mg/cm^3$ (pcf) | 34.44 (2.15) | 39.57 (2.47) | 39.89 (2.49) | -- | 39.89 (2.49) | 5.45 (0.34) |
| RSI, $K \cdot m^2/W$ (R, $°F \cdot Ft^2 \cdot h/BTU$) | 1.17 (6.67) | 1.11 (6.29) | 1.08 (6.13) | -- | 1.06 (6.02) | 0.11 (0.65) |
| II comp. | 15.12 | 18.1 | 21.3 | -- | -- | 6.18 |
| %CCC | 92.98 | 89.42 | 92.5 | -- | 90.7 | 3.56 |
| Dim Stab. | 1.93 | 1.71 | -1.51 | -- | 2.49 | |
| CDR | 1.00 | 1.44 | 1.84 | -- | 2.08 | |
| *A-2* | Initial | 3 months | 6 months | 9 months | 12 months | Δ |
| Gel, s | 18 | 22 | 30 | 30 | 27 | 12 |
| Tack, s | 23 | 35 | 44 | 47 | 36 | 24 |
| A/B | 1.07 | 1.26 | 1.08 | 1.10 | 0.94 | 0.32 |
| Density, $mg/cm^3$ (pcf) | 32.36 (2.02) | 37.16 (2.32) | 37.32 (2.33) | 39.09 (2.44) | 36.36 (2.27) | 6.73 (0.42) |
| RSI, $K \cdot m^2/W$ (R, $°F \cdot Ft^2 \cdot h/BTU$) | 1.18 (6.68) | 1.17 (6.62) | 1.10 (6.23) | 1.07 (6.08) | 1.04 (5.91) | 0.14 (0.77) |
| II comp. | 13.67 | 22.74 | 15.44 | 16.64 | 15.01 | 9.07 |
| %CCC | 93.18 | 94.16 | 93.60 | 92.47 | 97.30 | 4.83 |
| Dim Stab. | 5.17 | 3.05 | 6.93 | 5.63 | -- | |
| CDR | 1.00 | 1.22 | 1.67 | 1.67 | 1.50 | |

*Table #4 Physical Properties Characterization (continued)*

| *A-1* | Initial | 3 months | 6 months | 9 months | 12 months | Δ |
|---|---|---|---|---|---|---|
| Gel, s | 20 | 21 | 30 | 30 | 28 | 10 |
| Tack, s | 26 | 30 | 45 | 46 | 40 | 20 |
| A/B | 1.08 | 1.11 | 1.10 | 1.12 | 1.01 | 0.11 |
| Density, $mg/cm^3$ (pcf) | 33.48 (2.09) | 35.56 (2.22) | 37.64 (2.35) | 38.60 (2.41) | 38.28 (2.39) | 5.13 (0.32) |

(continued)

| *A-1* | Initial | 3 months | 6 months | 9 months | 12 months | Δ |
|---|---|---|---|---|---|---|
| RSI, K·m$^2$/W (R, °F·Ft$^2$·h/BTU) | 1.15 (6.53) | 1.17 (6.64) | 1.13 (6.40) | 1.13 (6.41) | 1.08 (6.14) | 0.09 (0.5) |
| II comp. | 13.57 | 17.38 | 15.31 | 17.08 | 15.89 | 3.81 |
| %CCC | 92.99 | 94.48 | 92.33 | 94.12 | 93.82 | 2.15 |
| Dim Stab. | 5.66 | 8.94 | 6.06 | 5.74 | -- | |
| CDR | 1.00 | 1.05 | 1.50 | 1.50 | 1.40 | |
| *A-4* | Initial | 3 months | 6 months | 9 months | 12 months | Δ |
| Gel, s | 21 | 28 | 40 | 33 | 29 | 19 |
| Tack, s | 48 | 60 | 98 | 78 | 54 | 50 |
| A/B | 1.19 | 1.26 | 1.28 | 1.19 | 1.30 | 0.11 |
| Density, mg/cm$^3$ (pcf) | 34.12 (2.13) | 38.92 (2.43) | 41.81 (2.61) | 40.05 (2.50) | 41.65 (2.60) | 7.69 (0.48) |
| RSI, K·m$^2$/W (R, °F·Ft$^2$·h/BTU) | 1.17 (6.66) | 1.13 (6.42) | 1.12 (6.35) | 1.09 (6.19) | 1.02 (5.79) | 0.15 (0.87) |
| II comp. | 24.75 | 24.08 | 24.29 | 26.14 | 24.49 | 2.06 |
| %CCC | 93.32 | 95.24 | 94.97 | 94.66 | 92.87 | 2.37 |
| Dim Stab. | 3.14 | 4.56 | 2.43 | 1.78 | -- | |
| CDR | 1.00 | 1.33 | 1.90 | 1.57 | 1.38 | |
| *T-1* | Initial | 3 months | 6 months | 9 months | 12 months | Δ |
| Gel, s | 17 | 22 | 26 | -- | 32 | 15 |
| Tack, s | 23 | 31 | 32 | -- | 43 | 20 |
| A/B | 1.08 | 0.97 | 0.97 | -- | 0.92 | 0.16 |
| Density, mg/cm$^3$ (pcf) | 29.63 (1.85) | 33.00 (2.06) | 33.48 (2.09) | -- | 35.08 (2.19) | 5.45 (0.34) |
| RSI, K·m$^2$/W (R, °F·Ft$^2$·h/BTU) | 1.13 (6.43) | 1.21 (6.86) | 1.16 (6.61) | -- | 1.17 (6.65) | 0.08 (0.43) |
| II comp. | 13.93 | 14.09 | 14.3 | -- | 12.37 | 1.93 |
| %CCC | 97.65 | 94.12 | 97.77 | -- | 97.26 | 3.65 |
| Dim Stab. | -- | -- | 4.85 | -- | 4.25 | |
| CDR | 1.00 | 1.29 | 1.53 | -- | 1.88 | |

*Table #4 Physical Properties Characterization (continued)*

| *T-2* | Initial | 3 months | 6 months | 9 months | 12 months | Δ |
|---|---|---|---|---|---|---|
| Gel, s | 13 | 20 | 29 | 40 | 39 | 27 |
| Tack, s | 18 | 27 | 39 | 65 | 55 | 47 |
| A/B | 1.13 | 0.7 | 1.05 | 1.08 | 1.07 | 0.43 |
| Density, mg/cm$^3$ (pcf) | 31.72 (1.99) | -- | 33.16 (2.07) | 32.04 (2.00) | 33.48 (2.09) | 1.60 (0.1) |
| RSI, K·m$^2$/W (R, °F·Ft$^2$·h/BTU) | 1.17 (6.67) | -- | 1.16 (6.6) | -- | -- | 0.01 (0.07) |
| II comp. | 16.29 | -- | 22.8 | -- | -- | 6.51 |
| %CCC | 96.82 | -- | 96.38 | -- | -- | 0.44 |
| Dim Stab. | 1.23 | -- | -- | -- | -- | |

(continued)

| *T-2* | Initial | 3 months | 6 months | 9 months | 12 months | Δ |
|---|---|---|---|---|---|---|
| CDR | 1.00 | 1.54 | 2.23 | 3.08 | 3 | |
| *T-3* | Initial | 3 months | 6 months | 9 months | 12 months | Δ |
| Gel, s | 13 | 25 | -- | 40 | 44 | 31 |
| Tack, s | 19 | 44 | -- | 63 | 62 | 44 |
| A/B | 1.25 | 1.18 | -- | 1.16 | 1.00 | 0.25 |
| Density, mg/cm$^3$ (pcf) | 33.00 (2.06) | 31.08 (1.94) | -- | 33.16 (2.07) | 35.56 (2.22) | 4.49 (0.28) |
| RSI, K·m$^2$/W (R, °F·Ft$^2$·h/BTU) | 1.16 (6.58) | 1.14 (6.47) | -- | -- | -- | 0.02 (0.11) |
| II comp. | 17.51 | 23.34 | -- | -- | -- | 5.83 |
| %CCC | 95.62 | 92.29 | -- | -- | -- | 3.33 |
| Dim Stab. | 2 | 4.45 | -- | -- | -- | 2.45 |
| CDR | 1.00 | 1.92 | -- | 3.08 | 3.38 | |
| *T-5* | Initial | 3 months | 6 months | 9 months | 12 months | Δ |
| Gel, s | 18 | 24 | -- | -- | 47 | 29 |
| Tack, s | 25 | 28 | -- | -- | 84 | 59 |
| A/B | 1.14 | 0.98 | -- | -- | 1.08 | 0.16 |
| Density, mg/cm$^3$ (pcf) | 30.44 (1.9) | 31.88 (1.99) | -- | -- | 35.24 (2.20) | 4.81 (0.3) |
| RSI, K.m$^2$/W (R, °F·Ft$^2$·h/BTU) | 1.18 (6.7) | 0.93 (5.3) | -- | -- | -- | 0.25 (1.4) |
| II comp. | 19.33 | 19.82 | -- | -- | 13.54 | 6.28 |
| %CCC | 98.05 | 97.51 | -- | -- | 90.24 | 7.81 |
| Dim Stab. | -- | -- | -- | -- | -- | |
| CDR | 1.00 | 1.33 | -- | -- | 2.61 | |

*Table #4 Physical Properties Characterization (continued)*

| *T-6* | Initial | 3 months | 6 months | 9 months | 12 months | Δ |
|---|---|---|---|---|---|---|
| Gel, s | 19 | 26 | 43 | -- | 80 | 61 |
| Tack, s | 28 | 35 | 57 | -- | 145 | 117 |
| A/B | 1.13 | 1.09 | 1.01 | -- | 0.97 | 0.16 |
| Density, mg/cm$^3$ (pcf) | 31.56 (1.97) | 33.00 (2.06) | 33.48 (2.09) | -- | 38.60 (2.41) | 7.05 (0.44) |
| RSI, K·m$^2$/W (R, °F·Ft$^2$·h/BTU) | 1.18 (6.7) | 0.87 (4.94) | -- | -- | -- | 0.31 (1.76) |
| II comp. | 18.86 | 24.89 | -- | -- | 15.08 | 9.81 |
| %CCC | 98.03 | 99.07 | -- | -- | 92.63 | 6.44 |
| Dim Stab. | -- | -- | -- | -- | -- | |
| CDR | 1.00 | 1.37 | 2.26 | -- | 4.21 | |
| *E17-1* | Initial | 3 months | 6 months | 9 months | 12 months | Δ |
| Gel, s | 20 | 25 | 28 | 34 | 37 | 17 |
| Tack, s | 25 | 32 | 38 | 45 | 52 | 27 |
| A/B | 1.01 | 0.95 | 0.96 | 1.03 | 0.81 | 0.22 |

(continued)

| *E17-1* | Initial | 3 months | 6 months | 9 months | 12 months | Δ |
|---|---|---|---|---|---|---|
| Density, mg/cm$^3$ (pcf) | 32.04 (2) | 34.92 (2.18) | 35.24 (2.2) | 35.72 (2.23) | 39.09 (2.44) | 7.05 (0.44) |
| RSI, K·m$^2$/W (R, °F·Ft$^2$·h/BTU) | 1.18 (6.72) | 1.16 (6.6) | 1.14 (6.45) | 1.10 (6.22) | 1.17 (6.65) | 0.08 (0.5) |
| II comp. | 20.11 | 15.01 | 21.49 | 23.9 | 15.69 | 8.89 |
| %CCC | 96.29 | 96.1 | 97.65 | 96.3 | 90.08 | 7.57 |
| Dim Stab. | - | 4.81 | -- | -- | 4.1 | |
| CDR | 1.00 | 1.25 | 1.40 | 1.70 | 1.85 | |
| *E17-3* | Initial | 3 months | 6 months | 9 months | 12 months | Δ |
| Gel, s | 24 | 33 | 35 | 41 | 40 | 17 |
| Tack, s | 31 | 60 | 47 | 66 | 56 | 35 |
| A/B | 1 | 1.05 | 0.79 | 1.1 | 0.91 | 0.31 |
| Density, mg/cm$^3$ (pcf) | 34.60 (2.16) | 37.16 (2.32) | 38.12 (2.38) | 39.25 (2.45) | 37.16 (2.32) | 4.65 (0.29) |
| RSI, K·m$^2$/W (R, °F·Ft$^2$·h/BTU) | 1.17 (6.65) | 1.12 (6.35) | -- | 1.11 (6.29) | 1.12 (6.37) | 0.06 (0.36) |
| II comp. | 23.46 | 22.59 | 16.75 | 33.06 | 23.35 | 16.31 |
| %CCC | 96.11 | 94.32 | 93.96 | 94.15 | 95.24 | 2.15 |
| Dim Stab. | -- | 3.14 | -- | -- | -- | |
| CDR | .00 | 1.38 | 1.46 | 1.71 | 1.67 | |

*Table #4 Physical Properties Characterization (continued)*

| *E31-3* | Initial | 3 months | 6 months | 9 months | 12 months | Δ |
|---|---|---|---|---|---|---|
| Gel, s | 26 | 29 | 33 | 35 | 44 | 18 |
| Tack, s | 40 | 37 | 43 | 49 | 57 | 20 |
| A/B | 1.15 | 1.1 | 1.17 | 1.01 | 0.9 | 0.26 |
| Density, mg/cm$^3$ (pcf) | 31.88 (1.99) | 33.32 (2.08) | 33.96 (2.12) | 34.28 (2.14) | 39.73 (2.48) | 7.85 (0.49) |
| RSI, K·m$^2$/W (R, °F·Ft$^2$·h/BTU) | 1.14 (6.47) | 1.13 (6.39) | 1.13 (6.39) | 1.17 (6.67) | 1.15 (6.51) | 0.04 (0.28) |
| II comp. | 26.07 | 22.53 | 28.47 | 17.4 | 16.75 | 11.72 |
| %CCC | 96.48 | 95.93 | 97.33 | 94.47 | 92.62 | 4.71 |
| Dim Stab. | -- | 4.76 | -- | -- | -- | |
| CDR | 1.00 | 1.12 | 1.27 | 1.35 | 1.69 | |

Formulation F-1 is an all polyether polyol based polyurethane slow cure formulation as noted by the gel and tack times. As used in this application, slow cure means: a polyurethane foam which has an initial gel time of at least 50 seconds, more preferably of at least 60 seconds, and most preferably of at least 70 seconds; and an initial tack of at least 60 seconds, more preferably of at least 80 seconds, and most preferably of at least 100 seconds.

The addition of amine catalysts is within the scope of this invention as evidenced by formulations T-1 through T-7. However, the ratio of the catalysts still plays a role in whether the synthesized polyurethane will meet the targeted characteristics.

The best mode for carrying out the invention has been described for purposes of illustrating the best mode known to the applicant at the time. The examples are illustrative only and not meant to limit the invention. The invention has been described with reference to preferred and alternate embodiments. Obviously, modifications and alterations will occur to others upon the reading and understanding of the specification. It is intended to include all such modifications and alterations insofar as they come within the scope of the appended claims.

## Claims

1. A low-pressure two-component polyurethane foam composition in which "A-side" and "B-side" reactants comprise:

    at least one A-side diisocyanate and at least one HFO propellant;
    at least two B-side polyols, at least one B-side plasticizer, at least one surfactant, at least two catalysts, water, glycerin, wherein the glycerin is additional to the polyols, and at least one HFO propellant;

        said at least two catalysts comprising

            at least one tin-containing catalyst and
            at least one potassium-containing catalyst;

        a weight ratio of the at least one tin-containing catalyst to the at least one potassium-containing catalyst being approximately equal to or greater than 0.5;

    a catalytic decay ratio of the polyurethane foam defined as a ratio of accelerated ageing gel time to initial gel time, as measured in the description, the catalytic decay ratio of the polyurethane foam being approximately equal to or less than 2.5.

2. The two-component polyurethane foam composition of claim 1 wherein

    the at least two polyols are selected from the group consisting of

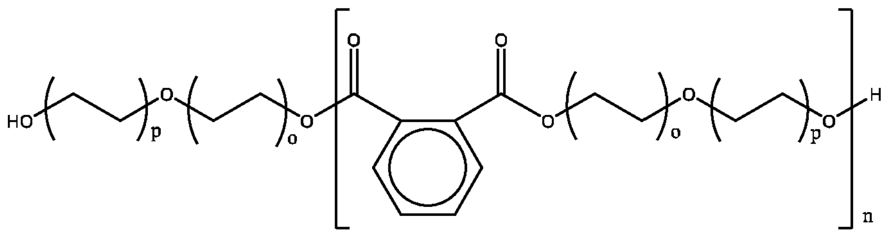

    n ranges from 1-30 inclusive;
    o ranges from 1 to 5 inclusive; and
    p ranges from 1 to 5 inclusive;
    and

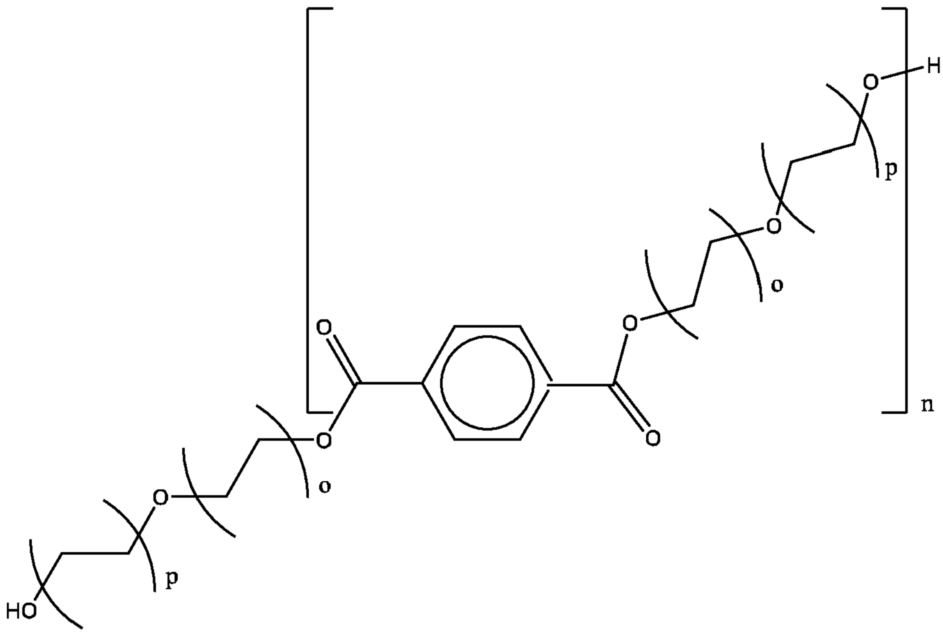

n ranges from 1-30 inclusive;
o ranges from 1 to 5 inclusive; and
p ranges from 1 to 5 inclusive.

**3.** The two-component polyurethane foam composition of claim 1 wherein

(i) the at least two polyols are selected from the group consisting of an aromatic phthalic anhydride polyester polyol, an aromatic terephthalic anhydride polyester polyol and a polyamide polyester polyol; or
(ii) the at least two polyols are selected from the group consisting of an aromatic polyester polyol and a saturated polyester polyol.

**4.** The two-component polyurethane foam composition of claim 1 wherein the at least two polyols are selected from the group consisting of a hybrid aromatic polyester polyol having a diethylene glycol / adipic acid polymer backbone and an aromatic polyester polyol.

**5.** The two-component polyurethane foam composition of claim 1 wherein

the tin-containing catalyst is an organotin mercaptide and the potassium-containing catalyst is a potassium carboxylate,
for example wherein a combined weight percent of the tin-containing catalyst and the potassium-containing catalyst is less than 3 weight percent.

**6.** The two-component polyurethane foam composition of claim 1 wherein

a weight percent of added water is less than approximately 5 weight percent;
for example wherein a weight percent of added water is less than approximately 3 weight percent.

**7.** The two-component polyurethane foam composition of claim 1 wherein
a weight percent of added water is less than or equal to approximately 2 weight percent.

**8.** The two-component polyurethane foam composition of claim 1 wherein
a weight percent of added glycerin is less than approximately 5 weight percent, less than approximately 3 weight percent, or less than approximately 2 weight percent.

**9.** A process for synthesizing a low-pressure two-component polyurethane foam composition in which "A-side" and "B-side" reactants comprise:

at least one A-side diisocyanate and at least one HFO propellant;
at least two B-side polyols, at least one B-side plasticizer, at least one surfactant, at least two catalysts, water, glycerin, wherein the glycerin is additional to the polyols, and at least one HFO propellant;
said at least two catalysts comprising at least one tin-containing catalyst and at least one potassium-containing catalyst; and
a catalytic decay ratio of the polyurethane foam defined as a ratio of accelerated ageing gel time to initial gel time, the catalytic decay ratio of the polyurethane foam being approximately equal to or less than 2.5.

**10.** The process of claim 9 wherein

the step of adding the at least one tin-containing catalyst and the at least one potassium catalyst is in a weight ratio of approximately equal to or greater than 0.67,
for example wherein
the at least one tin-containing catalyst is an organotin mercaptide and the potassium-containing catalyst is a potassium carboxylate.

**11.** The process of claim 9 wherein

the at least two B-side polyols are polyester polyols,
for example wherein the at least two B-side polyols are polyester polyols and selected from the group consisting of

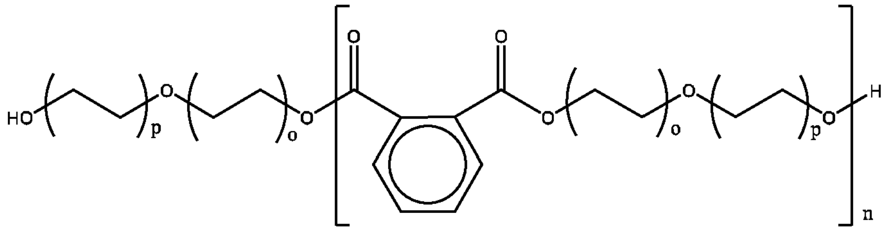

n ranges from 1-30 inclusive;
o ranges from 1 to 5 inclusive; and
p ranges from 1 to 5 inclusive;
and

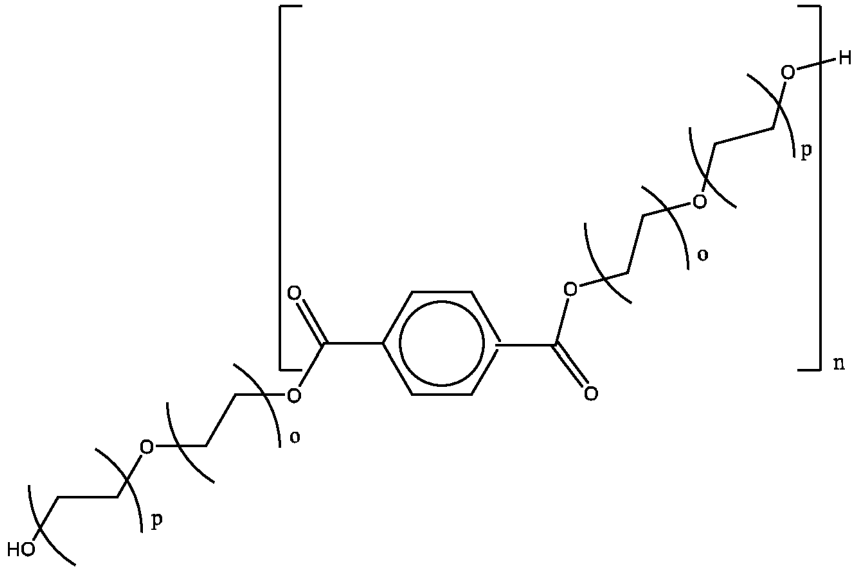

n ranges from 1-30 inclusive;
o ranges from 1 to 5 inclusive; and
p ranges from 1 to 5 inclusive;

**12.** The process of claim 9 wherein the at least two B-side polyols are polyether polyols.

## Patentansprüche

**1.** Schaumstoffzusammensetzung aus Niederdruck-Zweikomponentenpolyurethan, in der die "A-Seite-" und "B-Seite-" Reaktanten Folgendes umfassen:

mindestens ein A-Seite-Diisocyanat und mindestens ein HFO-Treibmittel;
mindestens zwei B-Seite-Polyole, mindestens einen B-Seite-Weichmacher, mindestens ein Tensid, mindestens zwei Katalysatoren, Wasser, Glycerin, wobei das Glycerin zusätzlich zu den Polyolen vorliegt, und mindestens ein HFO-Treibmittel;
wobei die mindestens zwei Katalysatoren Folgendes umfassen
mindestens einen zinnhaltigen Katalysator und
mindestens einen kaliumhaltigen Katalysator;
wobei ein Gewichtsverhältnis des mindestens einen zinnhaltigen Katalysators zu dem mindestens einen kaliumhaltigen Katalysator etwa gleich oder höher als 0,5 ist;
ein katalytisches Zerfallsverhältnis des Polyurethanschaumstoffs als ein Verhältnis beschleunigter Alterungsgelzeit zur anfänglichen Gelzeit, wie in der Beschreibung gemessen, definiert ist,
wobei das katalytische Zerfallsverhältnis des Polyurethanschaumstoffs etwa gleich oder geringer als 2,5 ist.

**2.** Zweikomponentenpolyurethan-Schaumstoffzusammensetzung nach Anspruch 1, wobei

die mindestens zwei Polyole aus der Gruppe ausgewählt sind bestehend aus

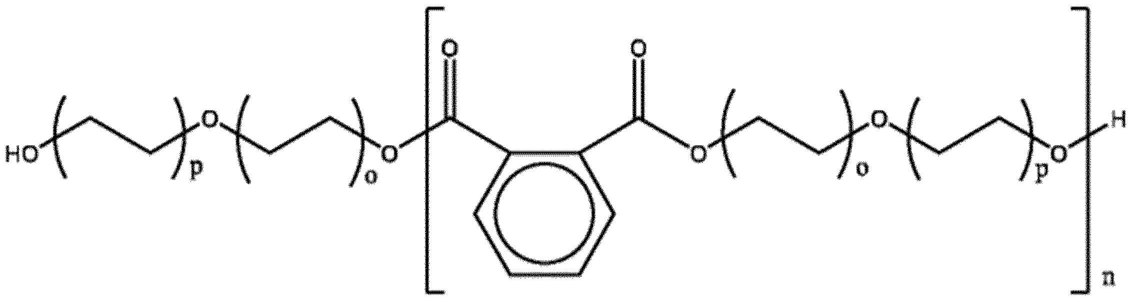

n im Bereich von einschließlich 1-30 liegt;
o im Bereich von einschließlich 1 bis 5 liegt; und
p im Bereich von einschließlich 1 bis 5 liegt;
und

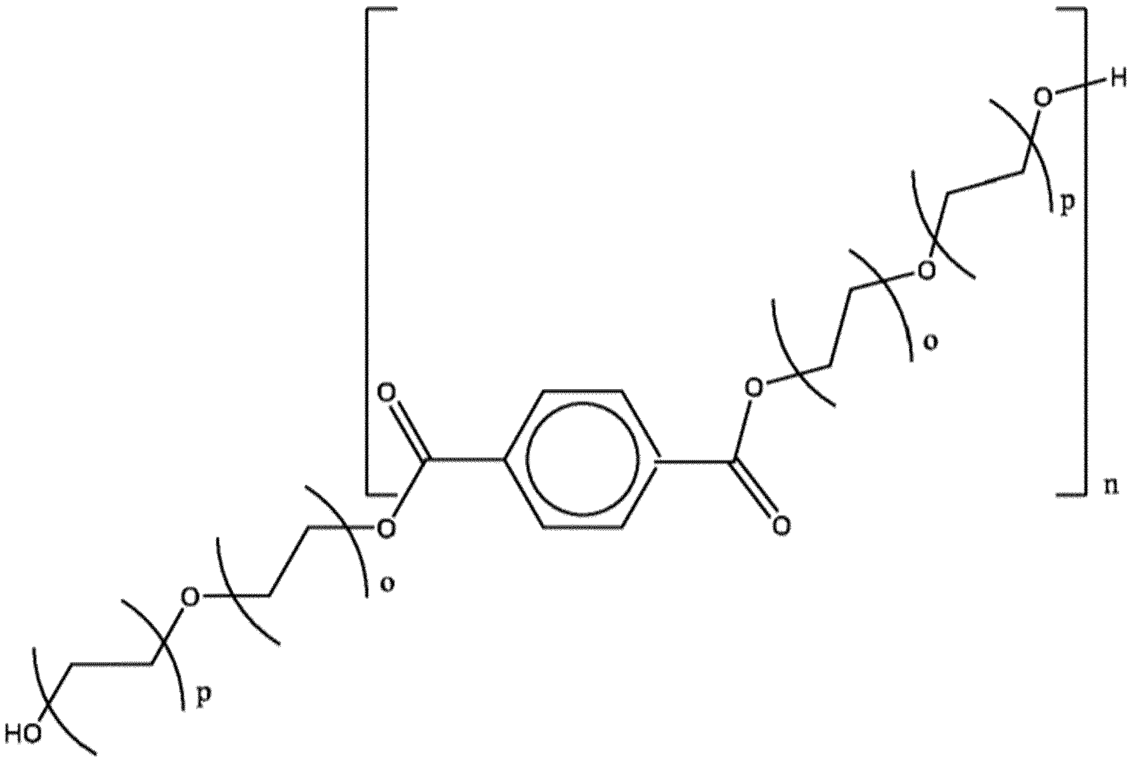

n im Bereich von einschließlich 1-30 liegt;
o im Bereich von einschließlich 1 bis 5 liegt; und
p im Bereich von einschließlich 1 bis 5 liegt.

**3.** Zweikomponentenpolyurethan-Schaumstoffzusammensetzung nach Anspruch 1, wobei

(i) die mindestens zwei Polyole aus der Gruppe ausgewählt sind bestehend aus einem aromatischen Phthalsäureanhydridpolyesterpolyol, einem aromatischen Terephthalsäureanhydridpolyesterpolyol und einem Polyamidpolyesterpolyol; oder
(ii) die mindestens zwei Polyole aus der Gruppe ausgewählt sind bestehend aus einem aromatischen Polyesterpolyol und einem gesättigten Polyesterpolyol.

**4.** Zweikomponentenpolyurethan-Schaumstoffzusammensetzung nach Anspruch 1, wobei die mindestens zwei Polyole aus der Gruppe ausgewählt sind bestehend aus einem aromatischen Hybridpolyesterpolyol, das eine Diethylenglykol-/Adipinsäurepolymer-Rückgratkette aufweist, und einem aromatischen Polyesterpolyol.

**5.** Zweikomponentenpolyurethan-Schaumstoffzusammensetzung nach Anspruch 1, wobei

der zinnhaltige Katalysator ein Organozinnmercaptid ist und der kaliumhaltige Katalysator ein Kaliumcarboxylat ist,
wobei beispielsweise ein kombinierter Gewichtsprozentsatz des zinnhaltigen Katalysators und des kaliumhaltigen Katalysators weniger als 3 Gewichtsprozent beträgt.

**6.** Zweikomponentenpolyurethan-Schaumstoffzusammensetzung nach Anspruch 1, wobei

ein Gewichtsprozentsatz von zugegebenem Wasser weniger als etwa 5 Gewichtsprozent beträgt;
wobei beispielsweise ein Gewichtsprozentsatz von zugegebenem Wasser weniger als etwa 3 Gewichtsprozent beträgt.

**7.** Zweikomponentenpolyurethan-Schaumstoffzusammensetzung nach Anspruch 1, wobei
ein Gewichtsprozentsatz von zugegebenem Wasser weniger als oder gleich etwa 2 Gewichtsprozent beträgt.

**8.** Zweikomponentenpolyurethan-Schaumstoffzusammensetzung nach Anspruch 1, wobei
ein Gewichtsprozentsatz von zugegebenem Glycerin weniger als etwa 5 Gewichtsprozent, weniger als etwa 3 Gewichtsprozent oder weniger als etwa 2 Gewichtsprozent beträgt.

**9.** Verfahren zum Synthetisieren einer Schaumstoffzusammensetzung aus Niederdruck-Zweikomponentenpolyurethan, in der die "A-Seite-" und "B-Seite-" Reaktanten Folgendes umfassen:

mindestens ein A-Seite-Diisocyanat und mindestens ein HFO-Treibmittel;
mindestens zwei B-Seite-Polyole, mindestens einen B-Seite-Weichmacher, mindestens ein Tensid, mindestens zwei Katalysatoren, Wasser, Glycerin, wobei das Glycerin zusätzlich zu den Polyolen vorliegt, und mindestens ein HFO-Treibmittel;
wobei die mindestens zwei Katalysatoren mindestens einen zinnhaltigen Katalysator
und mindestens einen kaliumhaltigen Katalysator umfassen; und
ein katalytisches Zerfallsverhältnis des Polyurethanschaumstoffs als ein Verhältnis beschleunigter Alterungsgelzeit zur anfänglichen Gelzeit definiert ist, wobei das katalytische Zerfallsverhältnis des Polyurethanschaumstoffs etwa gleich oder geringer als 2,5 ist.

**10.** Verfahren nach Anspruch 9, wobei

der Schritt des Zugebens des mindestens einen zinnhaltigen Katalysators und des mindestens einen Kaliumkatalysators ein Gewichtsverhältnis von etwa gleich oder höher als 0,67 ist;
wobei beispielsweise
der mindestens eine zinnhaltigen Katalysator ein Organozinnmercaptid ist und der kaliumhaltige Katalysator ein Kaliumcarboxylat ist.

**11.** Verfahren nach Anspruch 9, wobei

die mindestens zwei B-Seite-Polyole Polyesterpolyole sind,
wobei beispielsweise die mindestens zwei B-Seite-Polyole Polyesterpolyole sind und aus der Gruppe ausgewählt sind bestehend aus

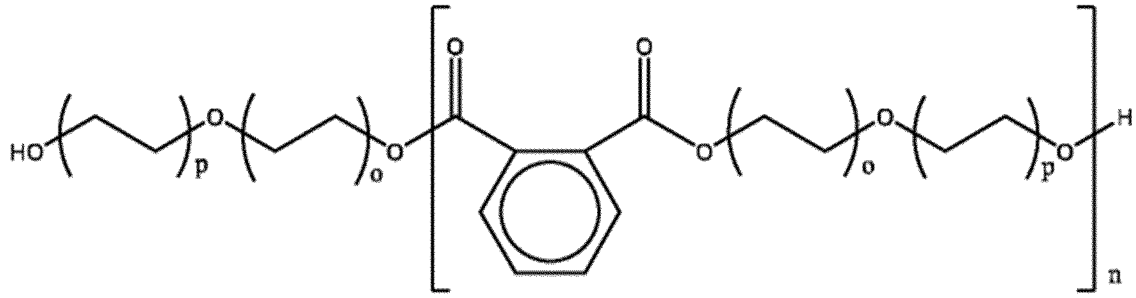

n im Bereich von einschließlich 1-30 liegt;
o im Bereich von einschließlich 1 bis 5 liegt; und
p im Bereich von einschließlich 1 bis 5 liegt;
und

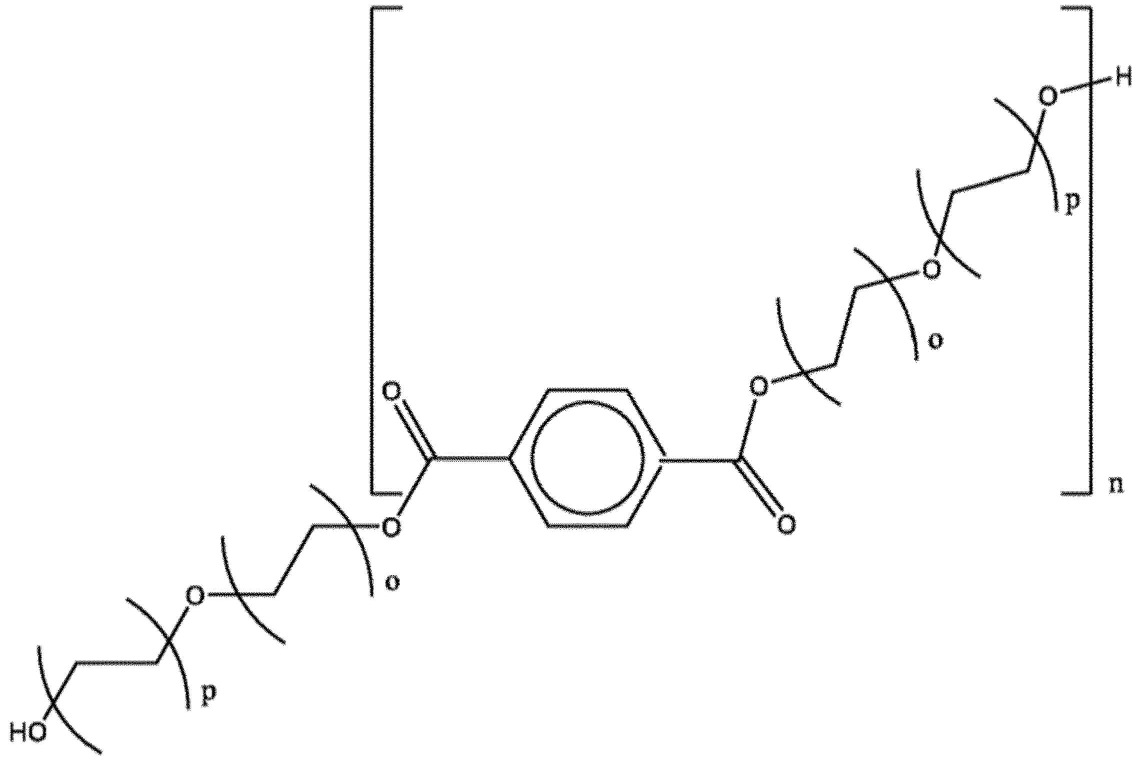

n im Bereich von einschließlich 1-30 liegt;
o im Bereich von einschließlich 1 bis 5 liegt; und
p im Bereich von einschließlich 1 bis 5 liegt.

**12.** Verfahren nach Anspruch 9, wobei die mindestens zwei B-Seite-Polyole Polyetherpolyole sind.

## Revendications

**1.** Composition de mousse de polyuréthane basse pression à deux composants dans laquelle des réactifs « côté-A » et « côté-B » comprennent:

au moins un diisocyanate côté-A et au moins un agent propulseur HFO;
au moins deux polyols côté-B, au moins un agent plastifiant côté-B, au moins un tensioactif, au moins deux catalyseurs, de l'eau, de la glycérine, dans laquelle la glycérine est additionnelle aux polyols, et au moins un agent propulseur HFO;

lesdits au moins deux catalyseurs comprenant
au moins un catalyseur contenant de l'étain et
au moins un catalyseur contenant du potassium;
un rapport en poids de l'au moins un catalyseur contenant de l'étain à l'au moins un catalyseur contenant du potassium étant approximativement supérieur ou égal à 0,5;
un ratio de désintégration catalytique de la mousse de polyuréthane est défini comme un ratio d'un temps de gel de maturation accélérée à un temps de gel initial, tel que mesuré dans la description,
le ratio de désintégration catalytique de la mousse de polyuréthane étant approximativement inférieur ou égal à 2,5.

**2.** Composition de mousse de polyuréthane à deux composants selon la revendication 1, dans laquelle

les au moins deux polyols sont sélectionnés dans le groupe constitué de

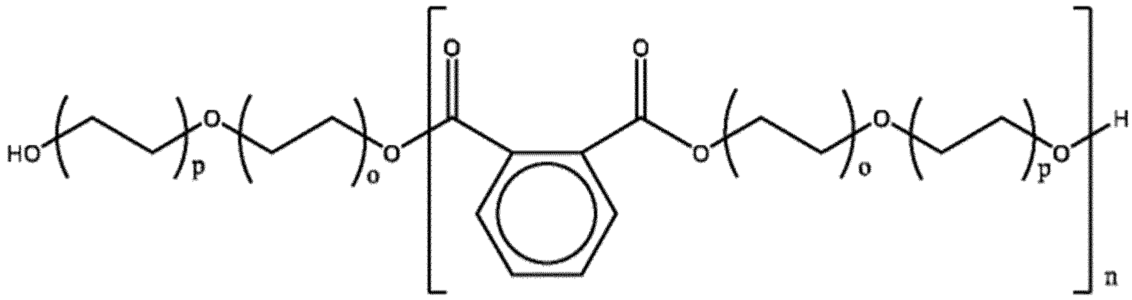

n s'étend de 1 à 30 inclus;
o s'étend de 1 à 5 inclus; et
p s'étend de 1 à 5 inclus;
et

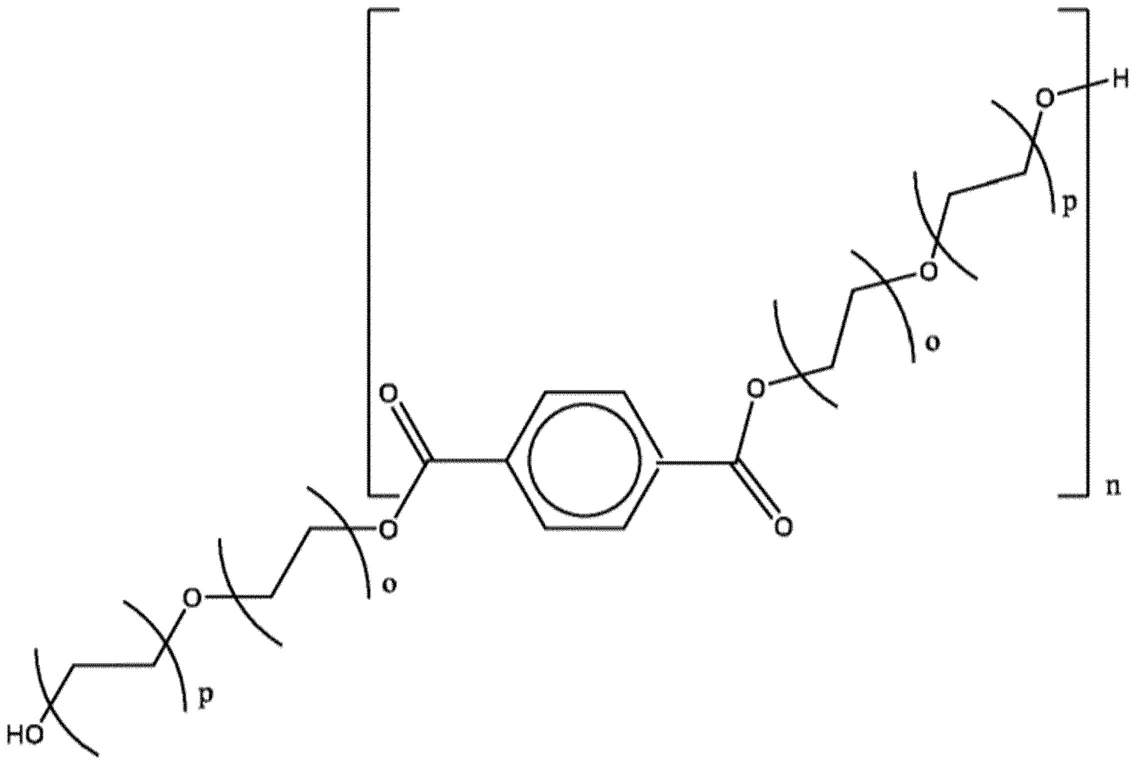

n s'étend de 1 à 30 inclus;
o s'étend de 1 à 5 inclus; et
p s'étend de 1 à 5 inclus.

**3.** Composition de mousse de polyuréthane à deux composants selon la revendication 1, dans laquelle

(i) les au moins deux polyols sont sélectionnés dans le groupe constitué d'un polyester polyol anhydride phtalique aromatique, d'un polyester polyol anhydride téréphtalique aromatique et d'un polyester polyol polyamide; ou
(ii) les au moins deux polyols sont sélectionnés dans le groupe constitué d'un polyester polyol aromatique et d'un polyester polyol saturé.

**4.** Composition de mousse de polyuréthane à deux composants selon la revendication 1, dans laquelle les au moins deux polyols sont sélectionnés dans le groupe constitué d'un polyester polyol aromatique hybride ayant un squelette polymère diéthylène glycol/acide adipique et un polyester polyol aromatique.

**5.** Composition de mousse de polyuréthane à deux composants selon la revendication 1, dans laquelle

le catalyseur contenant de l'étain est un mercaptide d'organoétain et le catalyseur contenant du potassium est un carboxylate de potassium,
par exemple dans laquelle un pourcentage en poids combiné du catalyseur contenant de l'étain et du catalyseur contenant du potassium est inférieur à 3 pour cent en poids.

**6.** Composition de mousse de polyuréthane à deux composants selon la revendication 1, dans laquelle

un pourcentage en poids d'eau ajoutée est inférieur à approximativement 5 pour cent en poids;
par exemple dans laquelle un pourcentage en poids d'eau ajoutée est inférieur à approximativement 3 pour cent en poids.

**7.** Composition de mousse de polyuréthane à deux composants selon la revendication 1, dans laquelle un pourcentage en poids d'eau ajoutée est inférieur ou égal à approximativement 2 pour cent en poids.

**8.** Composition de mousse de polyuréthane à deux composants selon la revendication 1, dans laquelle un pourcentage en poids de glycérine ajoutée est inférieur à approximativement 5 pour cent en poids, inférieur à approximativement 3 pour cent en poids, ou inférieur à approximativement 2 pour cent en poids.

**9.** Procédé de synthèse d'une composition de mousse de polyuréthane basse pression à deux composants dans lequel des réactifs « côté-A » et « côté-B » comprennent:

au moins un diisocyanate côté-A et au moins un agent propulseur HFO;
au moins deux polyols côté-B, au moins un agent plastifiant côté-B, au moins un tensioactif, au moins deux catalyseurs, de l'eau, de la glycérine, dans lequel la glycérine est additionnelle aux polyols, et au moins un agent propulseur HFO;
lesdits au moins deux catalyseurs comprenant au moins un catalyseur contenant de l'étain et au moins un catalyseur contenant du potassium; et
un ratio de désintégration catalytique de la mousse de polyuréthane défini comme un ratio du temps de gel de maturation accélérée au temps de gel initial, le ratio de désintégration catalytique de la mousse de polyuréthane étant approximativement inférieur ou égal à 2,5.

**10.** Procédé selon la revendication 9, dans lequel

l'étape d'addition de l'au moins un catalyseur contenant de l'étain et de l'au moins un catalyseur potassium se situe sous un rapport en poids approximativement supérieur ou égal à 0,67,
par exemple dans lequel
l'au moins un catalyseur contenant de l'étain est un mercaptide d'organoétain et le catalyseur contenant du potassium est un carboxylate de potassium.

**11.** Procédé selon la revendication 9, dans lequel

les au moins deux polyols côté-B sont des polyester polyols,
par exemple dans lequel les au moins deux polyols côté-B sont des polyester polyols et sont sélectionnés dans le groupe constitué de

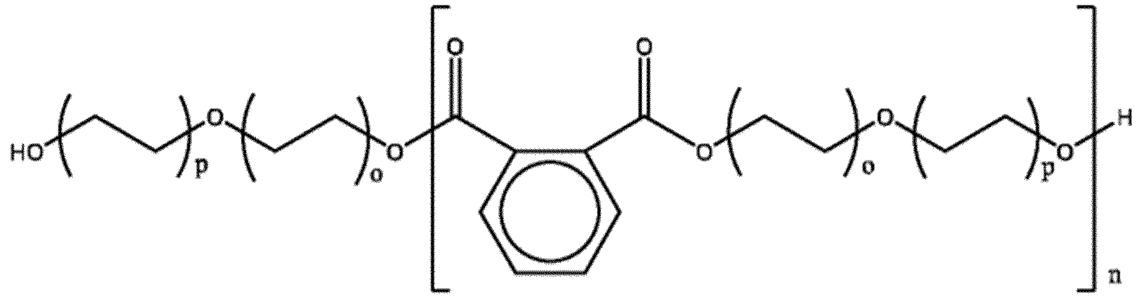

n s'étend de 1 à 30 inclus;
o s'étend de 1 à 5 inclus; et
p s'étend de 1 à 5 inclus;
et

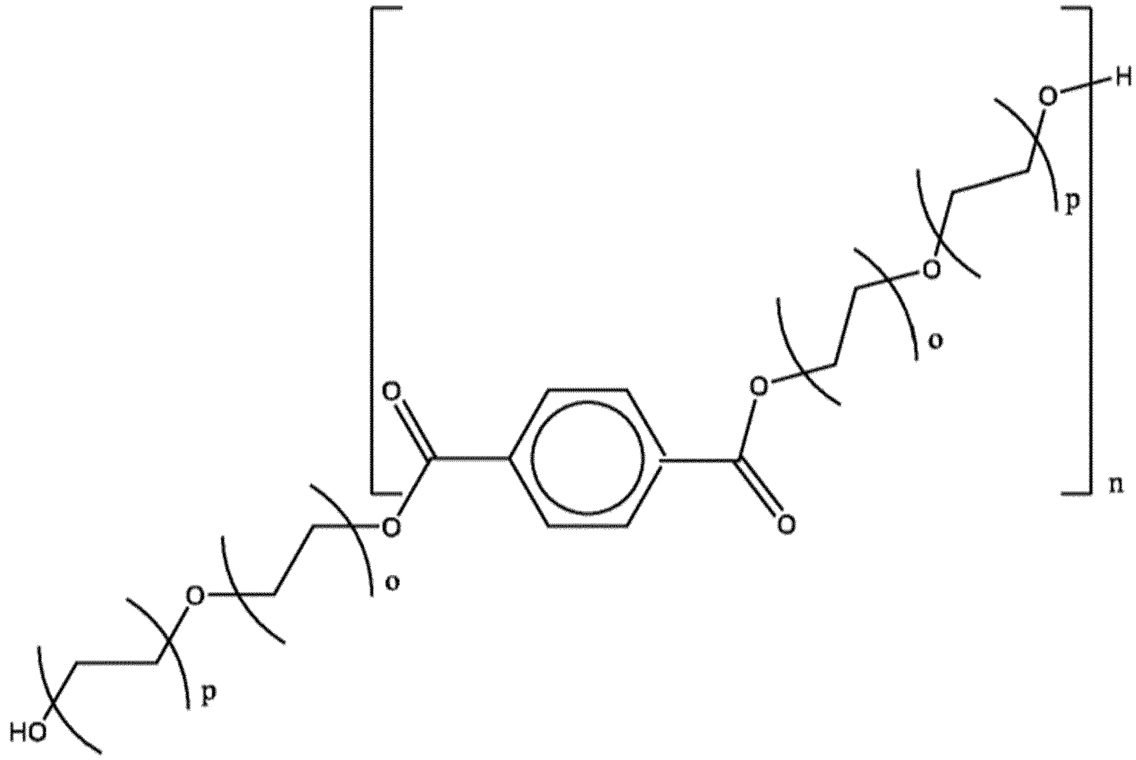

n s'étend de 1 à 30 inclus;
o s'étend de 1 à 5 inclus; et
p s'étend de 1 à 5 inclus.

**12.** Procédé selon la revendication 9, dans lequel les au moins deux polyols côté-B sont des polyéther polyols.

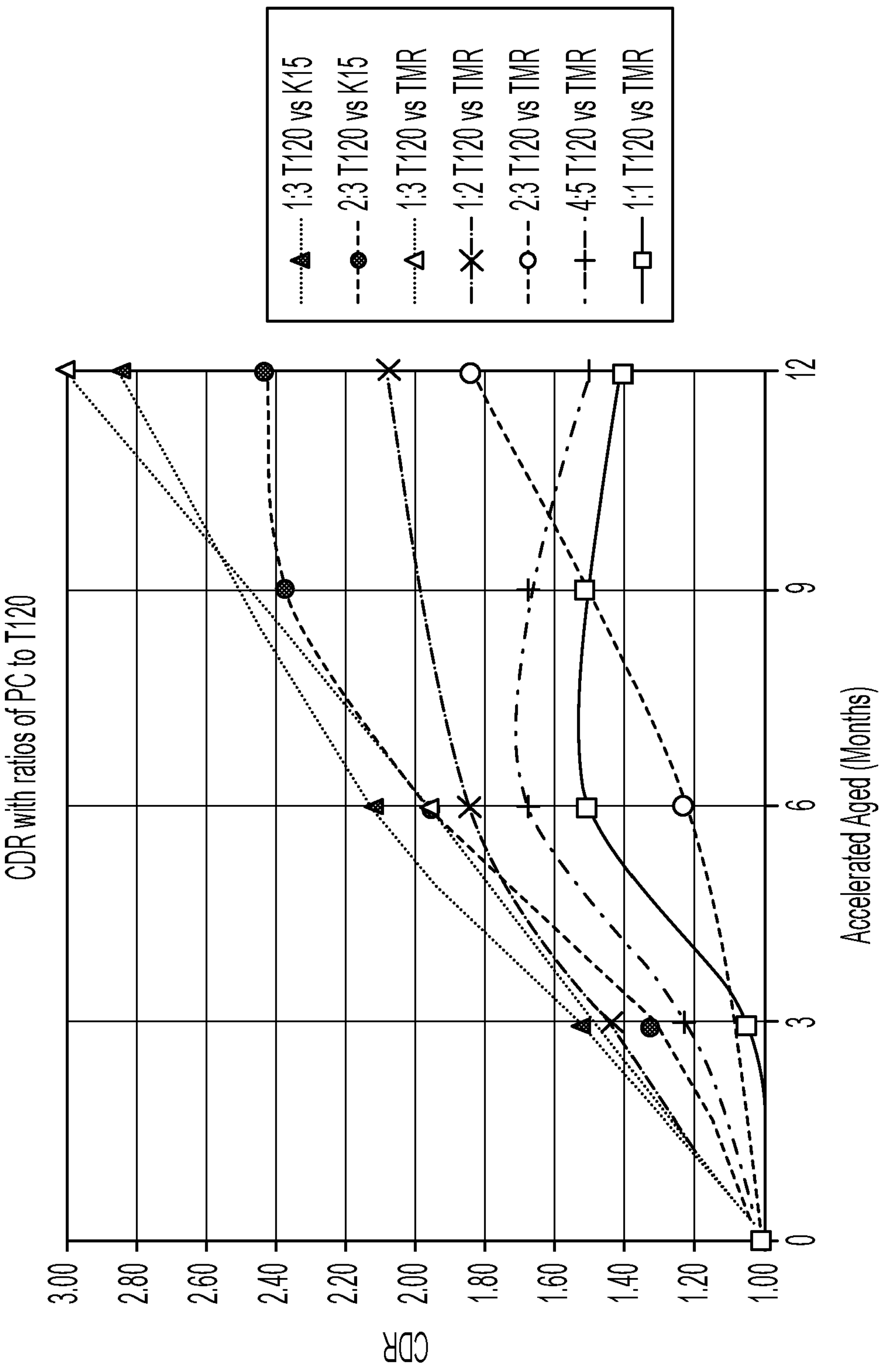
CDR with ratios of PC to T120
CDR
3.00
2.80
2.60
2.40
2.20
2.00
1.80
1.60
1.40
1.20
1.00
0
3
6
9
12
Accelerated Aged (Months)
1:3 T120 vs K15
2:3 T120 vs K15
1:3 T120 vs TMR
1:2 T120 vs TMR
2:3 T120 vs TMR
4:5 T120 vs TMR
1:1 T120 vs TMR

FIG. 1

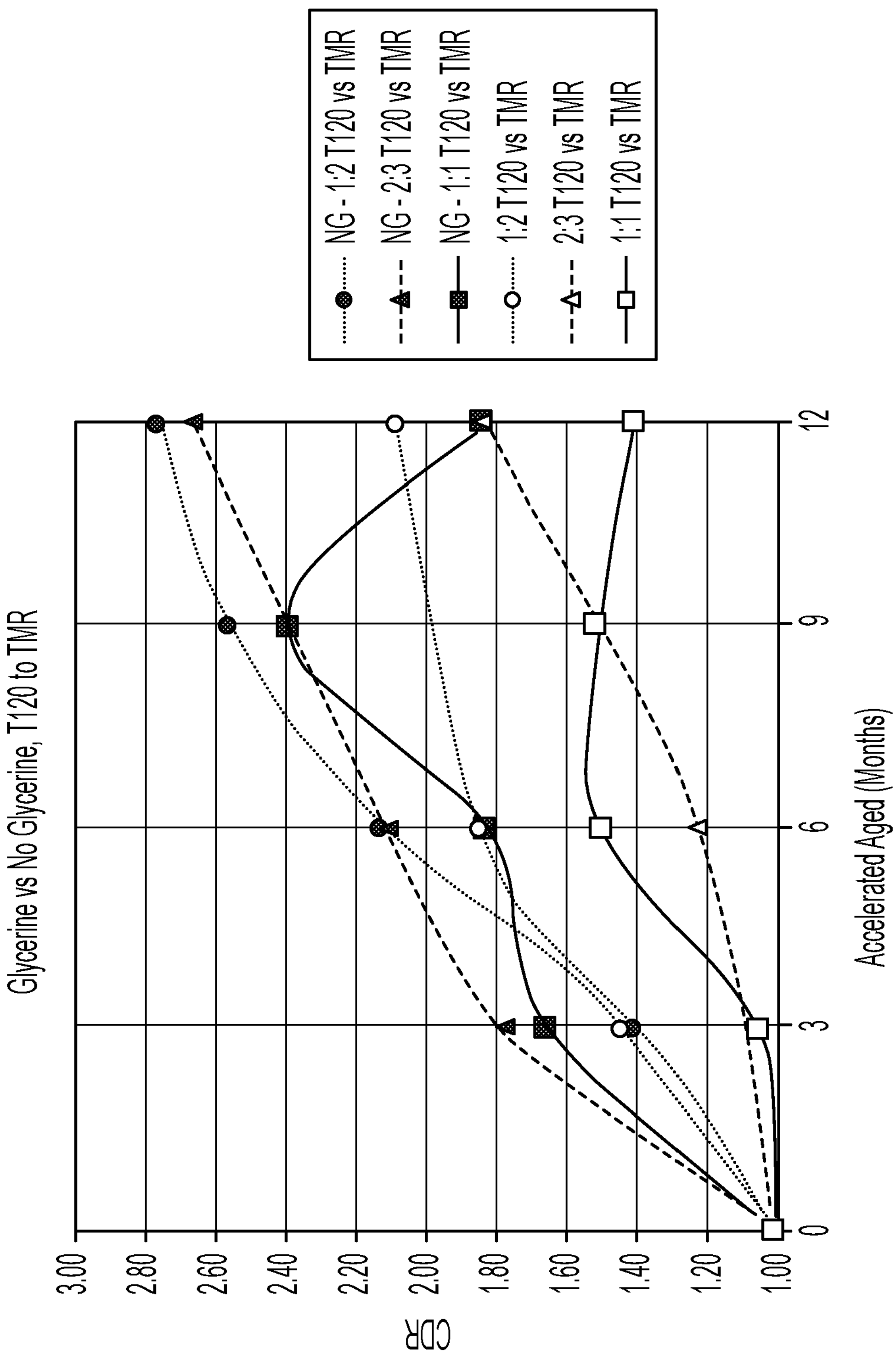
Glycerine vs No Glycerine, T120 to TMR
CDR
3.00
2.80
2.60
2.40
2.20
2.00
1.80
1.60
1.40
1.20
1.00
0
3
6
9
12
Accelerated Aged (Months)
NG - 1:2 T120 vs TMR
NG - 2:3 T120 vs TMR
NG - 1:1 T120 vs TMR
1:2 T120 vs TMR
2:3 T120 vs TMR
1:1 T120 vs TMR

FIG. 2

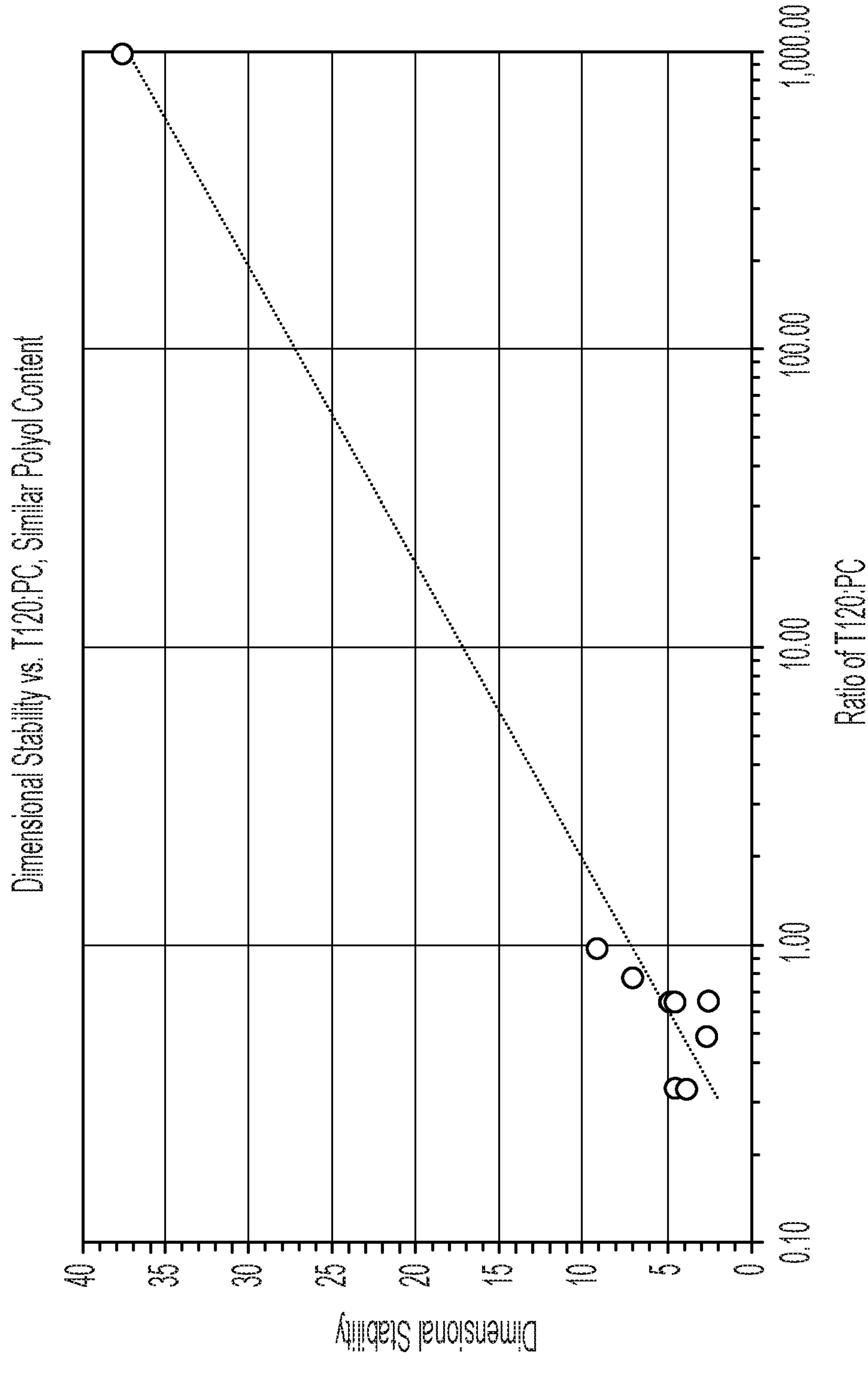
Dimensional Stability vs. T120:PC, Similar Polyol Content
Dimensional Stability
40
35
30
25
20
15
10
5
0
0.10
1.00
10.00
100.00
1,000.00
Ratio of T120:PC

FIG. 3

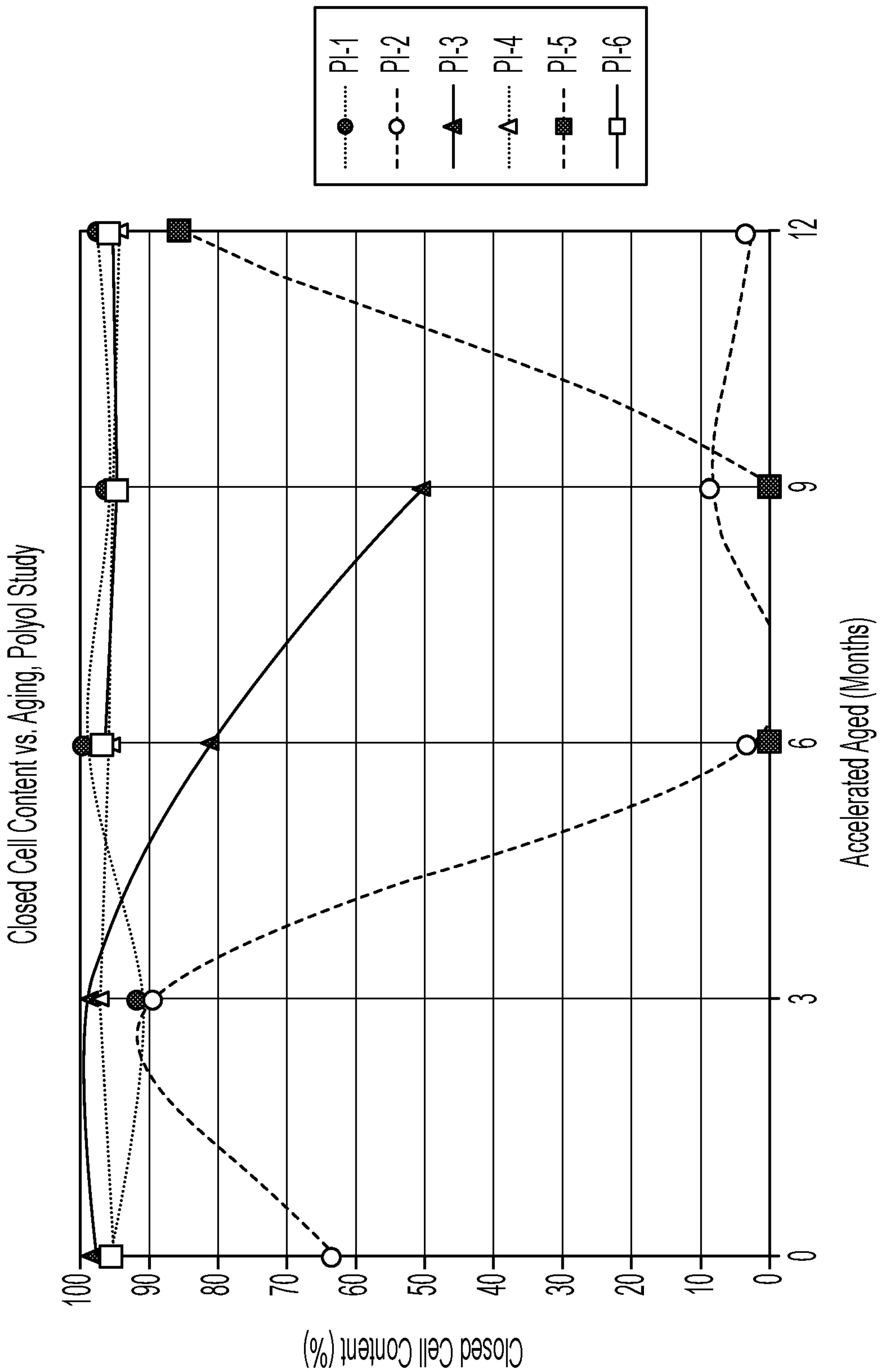
Closed Cell Content vs. Aging, Polyol Study
Closed Cell Content (%)
100
90
80
70
60
50
40
30
20
10
0
Accelerated Aged (Months)
0
3
6
9
12
PI-1
PI-2
PI-3
PI-4
PI-5
PI-6

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014134087 A1
- US 20190092910 A